# EUROPEAN PATENT SPECIFICATION

(11) **EP 3 659 798 B1**
(45) Date of publication and mention of the grant of the patent: **08.09.2021**
(21) Application number: 18209151.2
(22) Date of filing: 29.11.2018
(51) Int. Cl.: B32B 15/082, B32B 15/18, B32B 15/20, B32B 27/08, B32B 27/10, B32B 27/18, B32B 27/20, B32B 27/30, B32B 27/32, B32B 27/36, B32B 29/00

(54) **ACRYLIC FOILS WITH IMPROVED UV-PROTECTION PROPERTIES**
ACRYLISCHE FOLIEN MIT VERBESSERTEN UV-SCHUTZEIGENSCHAFTEN
FEUILLES ACRYLIQUES PRÉSENTANT DES PROPRIÉTÉS AMÉLIORÉES DE PROTECTION CONTRE LES UV

(43) Date of publication of application: 03.06.2020
(73) Proprietor: Röhm GmbH, 64295 Darmstadt (DE)
(72) Inventor: GUÉNANTEN, Claude, 64291 Darmstadt (DE); SEYOUM, Ghirmay, 63329 Egelsbach (DE); ENDERS, Michael, 64807 Dieburg (DE); GROOTHUES, Herbert, 64625 Bensheim (DE); STRUWE, Kim, 60598 Frankfurt am Main (DE)
(74) Representative: Röhm Patent Association

(56) References cited:
- WO-A1-2007/074138
- WO-A1-2014/068329
- WO-A1-2018/104293
- DE-A1-102009 020 933
- US-A1- 2017 197 391

## Description

The present invention relates to a coextruded multi-layer PMMA-based foil comprising at least two distinct layers each of the layers comprising at least one UV-absorber. The foil has a particularly high UV-resistance, a high weathering resistance and excellent mechanical properties. Therefore, the foil of the present invention is highly suitable for outdoor applications such as surface-protection of materials such as polyvinyl chloride (PVC) and for use in high-pressure laminates (HPLs).

HPLs are typically produced by laminating melamine- and phenol-resin-impregnated papers to one another under high pressure of at least 3 MPa (spec.), at temperatures above 120 °C with a cycle time that is generally from 30 to 100 min. The resultant composite material is equipped with a decorative outer layer to realize visual effects such as wood imitations or single-colour decorative effects. These decorative high-pressure laminates are used in various applications including but not limited to table tops, doors, furniture, kitchen worktops, and also sheets for cladding of walls, of balconies or of facades. Indoor applications normally require no particular protection from UV radiation, but a melamine resin surface must be equipped with an additional protective layer for outdoor use, where unprotected melamine resin surfaces would exhibit a significant degradation even after a relatively short time.

### Prior art

Polymethyl methacrylate (PMMA) has an excellent weathering resistance and is therefore particularly suitable for any of the applications in outdoor areas subject to weathering. For this reason, PMMA-based foils have become established in the market for use as surface-protection foils for coloured polyvinyl chloride (PVC) window profiles. There is a rising demand for surface-protection foils which markedly exceed the existing requirements for weathering resistance of the surface-protection foils. The foils obtainable on the market typically use benzotriazole type UV absorbers for stabilization with respect to UV radiation (wavelengths from 300 to 400 nm). These UV absorbers are known to lose their activity to a significant extent over a period of about 15 years. The weathering-protection foils modified therewith first become matt, and then microcracks form, followed by cracks. However, these UV absorbers also have advantageous properties: they are colour-neutral (no yellowness index), non-volatile (important for extrusion of the foils) and inexpensive.

WO 2007/0074138 A1 describes a PMMA-based foil which, in terms of weathering resistance, is superior to the foils available hitherto on the market and provides an improved weathering stability over more than 10 years. The foil typically uses a combination of a benzotriazole type UV absorber, a triazine type UV absorber and a sterically hindered amine (HALS, hindered amine light stabilizer). These components are employed as a mixture during manufacturing of said foil.

US 2008/0311406 A1 teaches a three-layer film composed of: an external PVDF layer, an intermediate layer composed of a PVDF-PMMA blend which comprises a UV absorber e.g. Tinuvin® 234, and an adhesion-promoter layer which comprises *inter alia* an anhydride of methacrylic acid. A particular advantage of the film is that it exhibits no white discoloration when tested in water for 2 h at 100 °C, and moreover exhibits good adhesion to melamine-resin-impregnated papers. However, the film has only a moderate long term weathering resistance.

WO 2015/180995 A1 discloses a UV-protective film suitable for lamination on high-pressure laminates (HPLs). The film has, from the outside to the inside, the following layers bonded to one another: a layer A comprising a fluoropolymer, a PMMA layer B comprising at least one UV stabilizer and/or UV absorber, and a layer C comprising at least one adhesion promoter and at least one poly(meth)acrylate, where the layer C can be laminated with a resin-impregnated paper to give an HPL and the layers B and/or C comprise at least one impact modifier. This film has an excellent long-term weathering resistance, exhibits no delamination, no blue sheen, and has advantageous optical properties, in particular a low haze value.

WO2014/068329 discloses a UV stable polyester film comprising a first UV absorber and a triazine UV absorber.

In recent years HPLs found an increasing use in architectural applications in countries having a relatively warm and humid climate and higher average sunshine duration. Additionally, due to ongoing global warming and destruction of the ozone layer HPLs used for such applications are exposed to higher temperatures and increasingly stronger solar UV-radiation. This poses even more stringent requirements on PMMA-based foils for use in these countries.

For instance, unplasticized poly(vinyl chloride) (PVC-U) window profiles and doors with laminated decorative foils need to comply with the norm RAL-GZ 716 (Climate M, total radiant exposure of 30 GJ/m²). Manufacturers of PVC windows profiles and doors with laminated decorative foils continuously develop products with an increasingly high long-term weathering resistance. Hence, decorative PVC foils with protective acrylic films for such applications are expected to resist to weathering over a period of about 30 years in Central Europe.

### Object

There is an ongoing demand for PMMA-based foils which, in terms of weathering resistance, are superior to the foils hitherto available on the market, and, in particular, provide an improved outdoor stability over a prolonged period (over 15 years), even in areas having a warm and humid climate and higher average sunshine duration. Such foils should provide an improved intrinsic stability of the foil with respect to UV effects and weathering effects and improved stability of its UV-protective action (discernible from the stability of the colour locus of a colour layer covered with the protective foil). Furthermore, it is desired, that the foil is substantially colour-neutral, has good mechanical properties and is substantially free from stress-whitening.

The term *"stability"* as used herein refers not only to the intrinsic stability of the foil with respect to weathering effects and mechanical damages but also to sustainability of its protective action.

### Summary of the invention

The present invention is based on a surprising finding that the long-term weathering stability of the foil described in WO 2007/0074138 A1 can be even further improved, if the UV-absorbers employed in WO 2007/0074138 A1 are placed in at least two separate layers. In particular, it showed to be advantageous, that the layer exposed to the outdoor solar radiation comprises at least one triazine type UV-absorber, whereas the layer beneath comprises at least one benzotriazole type UV absorber. Despite in the foil of the present invention the UV absorbers of WO 2007/0074138 A1 are located in separate layers, the synergistic effect resulting from their presence is even enhanced. Additionally, the inventors found that triazine type UV-absorbers can be replaced by inorganic UV absorbers such as titanium dioxide, tin dioxide or glass in form of glass beads or glass powder without affecting the long-term stability of the resulting foil.

Hence, the foil of the present invention successfully solves the technical problems defined above.

Additionally, the foil of the present invention provides the following advantages:
- It can be employed for lamination of various substrates at varying temperatures and upon using different lamination equipment. The appearance of the resulting laminated product is highly uniform and substantially independent on the processing conditions such as lamination temperature or material of the lamination rolls.
- It has an excellent weathering resistance and a very good chemicals resistance, for example with respect to commercially available cleaning compositions.
- It retains an appealing uniform appearance over a prolonged period.
- It can be manufactured in an extrusion plant in a cost-effective manner.

As will be readily appreciated by a skilled person, the term "*foil*" as used herein, refers to a sheet having a thickness below 5 mm, more preferably, below 1 mm. Although the foil of the present invention can be advantageously used as a protective coating, the term "*foil*" as used in the present application should be generally distinguished from the term *"coating".* A coating is typically a top layer of a multi-layer substrate and cannot be handled separately from said substrate. In contrast to a coating, the foil of the present invention is not necessarily a layer of a multi-layer article i.e. is not necessarily attached to any substrate and can therefore be separately handled and used for a variety of different purposes.

In its first aspect, the present invention is directed to a coextruded PMMA-based multi-layer foil, comprising a PMMA-based layer A and a PMMA-based layer B, as defined in claim 1.

According to the present invention, the first UV absorber is distinct from the second UV absorber.

According to the present invention, the foil is applied on a substrate in such a way, that the layer A is directed towards the environment and the layer B is directed towards the surface of the substrate.

The layer A comprises a triazine type compound as a first UV absorber and the layer B comprises a benzotriazole type compound as a second UV absorber.

The spectral transmittance of the layers A and B can be measured using an extruded monolayer foil of a given thickness with a suitable instrument such as Cary 5000 spectrophotometer, available from former Varian Inc. (Palo Alto, California, United States). For this purpose, the thickness of the monolayer foil used for the measurement corresponds to the thickness of the corresponding layer of the multilayer foil of the present invention. Alternatively, in particular if thickness of said layer is lower than 10 µm, the spectral transmittance of said layer can be determined by applying a monolayer coating on a quartz glass (fused silica) plate and measuring the spectral transmittance of the coating. The way of applying said coating is not particularly limited and includes e.g. extrusion onto the quartz glass plate, lamination, application of a solution of the material of said layer, followed by evaporation of the solvent etc. For instance, the monolayer can be advantageously applied using spin coating of a solution/dispersion of the material of said layer in acetone.

Alternatively, for the sake of determining the spectral transmittance, the layer in question can be co-extruded with a polymeric thermoplastic material having a particularly low spectral transmittance at the wavelengths of interest. For instance, the layer in question can be coextruded with a 40 µm thick layer of Plexiglas® 7H, available from Evonik Performance Materials GmbH (Darmstadt, Germany).

The spectral transmittance of the layers A and B is measured as a function of wavelength according to ISO 13468-2:1999. In addition, the instrument must have an extended wavelength range, such that it is capable of measuring in the UV spectral region. The measurement is carried out at a temperature of 23 ± 2 °C and relative humidity of 50 ± 5 %.

A further aspect of the present invention relates to a coated article covered by the foil of the present invention. Said coated article comprises a substrate which is at least partially covered by the coextruded foil, so that the layers of the foil are arranged in the following order, starting from the outer surface of the coated article:
- optionally, the layer D;
- the layer A;
- optionally, the layer E;
- the layer B; and
- optionally, the layer C.

Finally, a further aspect of the present invention relates to use of a coextruded foil as defined above for coating of a substrate, preferably by a process selected from co-extrusion, lamination or extrusion lamination.

### Detailed description of preferred embodiments

The co-extruded multilayer foil of the present invention comprises at least the layers A and B.

According to the present invention, the layer B has the composition defined in claim 1.

Adhesion-promoting copolymers are known in the prior art and are commonly employed in acrylic films in order to improve their adhesion to a substrate. The adhesion-promoting copolymer in the layer B, if present, comprises:
(i) from 70.0 to 95.0 wt.-% methyl methacrylate;
(ii) from 0.5 to 15.0 wt.-% maleic anhydride; and
(iii) from 0.0 to 25.0 wt.-% of other vinyl-copolymerizable monomers having no functional groups other than the vinyl function, based on the weight of the adhesion-promoting copolymer.

The cumulative content of the polymethyl(meth)acrylate and of one or several impact modifiers in the layer B is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer B. The content of the one or several impact modifiers in the layer B can be readily adjusted by a skilled person depending on the intended application. For instance, in applications in which a highly flexible soft foil is required relatively high contents of impact modifiers up to 85 wt.-% can be employed. On the other hand, for applications requiring relatively brittle hard foils the layer B may have a lower content of impact modifiers or even be substantially free of impact modifiers.

In order to ensure an adequate protection of the substrate material located beneath the multilayer foil, the spectral transmittance of the layer B at any wavelength λ_{B} is not more than 10%; wherein 270 nm ≤ λ_{B} ≤ 370 nm. In addition, the optical transmittance of the layer B at the wavelength of 370 nm is preferably chosen to be not more than 10%.

The exact composition of the layer A depends on the nature of the first UV absorber employed therein. According to the present invention, the layer A has the composition defined in claim 1.

The cumulative content of the polymethyl(meth)acrylate and of one or several impact modifiers in the layer A is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer A. Again, the content of the one or several impact modifiers in the layer A can be readily adjusted by a skilled person depending on the intended applications as described above.

Without wishing to be bound by theory, the inventors surprisingly found that in order to achieve an excellent long-term weathering stability in this embodiment it is important that the spectral transmittance of the layer A at any wavelength λ_{A} is not more than 10%; wherein 270 nm ≤ λ_{A} ≤ 360 nm.

In addition to the layers A and B described above, the multilayer foil of the present invention may further comprise an adhesion-promoting layer C. The layer C additionally improves adhesion of the foil of the present invention on a substrate and is particularly advantageous for the manufacturing of HPLs. Typically, the layer C comprises, based on the total weight of the layer C:
from 0.0 to 95.0 wt.-% of a polymethylmethacrylate;
from 0.0 to 75.0 wt.-% of one or several impact modifiers;
from 0.0 to 5.0 wt.-% of a UV-absorber, which is preferably the second UV-absorber;
from 0.0 to 5.0 wt.-% of one or several UV-stabilizers; and
from 5.0 to 80.0 wt.-% of an adhesion-promoting copolymer as specified above.

The cumulative content of the polymethyl(meth)acrylate and of one or several impact modifiers in the layer C is at least 20.0 wt.-%, preferably at least 30.0 wt.-%, more preferably at least 40.0 wt.-% and not more than 95.0 wt.-%, based on the weight of the layer C; the layer C comprises one or more UV stabilisers selected from hindered amine light stabilisers (HALS) and antioxidants.

Furthermore, in order to ensure
a good adhesion between the foil of the present invention and the substrate, the adhesion promoting layer C comprises at least 5 wt.-%, preferably at least 10 wt.-% of one or several impact modifiers.

It further proved to be advantageous in terms of mechanical properties of the foil, if the total content of one or several impact modifiers in the adhesion-promoting layer C is lower than in the layer B and the total content of one or several impact modifiers in the layer B is lower than in the layer A.

If the adhesion-promoting layer C is present, the layer B comprises less than 3.0 wt.-%, preferably less than 1.0 wt.-%, based on the weight of the layer B, of the adhesion-promoting copolymer.

If desired, the multi-layer foil of the present invention can be optionally rendered particularly weathering-resistant by providing it with a fluoropolymer-based layer D, which is located on top and adjacent to the layer A. The layer D may comprise, based on the total weight of the layer D:
from 40.0 to 100.0 wt.-% of at least one fluoropolymer;
from 0.0 to 60.0 wt.-% of a polymethylmethacrylate; and
from 0.0 to 30.0 wt.-% of substantially spherical glass beads.

The structure and the composition of the layer D are described in detail in the patent application WO 2018/104293 A1 the entire disclosure of which is incorporated herein by reference.

The fluoropolymer in the layer D may be selected from polyvinylidene fluoride (PVDF), polyvinylfluoride (PVF), polytetrafluorethylene (PTFE), polyethylenetetrafluoroethylene (ETFE), fluorinated ethylene-propylene (FEP) or a mixture or copolymers thereof.

Furthermore, in some embodiments, the foil may further comprise a layer E, which, if present, is located between the layer A and the layer B and comprises a combination of the first UV absorber and the second UV absorber as described above. Typically, the layer E has the following composition:
from 0.0 to 99.9 wt.-% of a polymethylmethacrylate;
from 0.0 to 95.0 wt.-% of one or several impact modifiers;
from 0.0 to 30.0 wt.-% of a fluoropolymer;
from 0.0 to 20.0 wt.-% of an adhesion-promoting copolymer comprising
   (i) from 70.0 to 95.0 wt.-% methyl methacrylate;
   (ii) from 0.5 to 15.0 wt.-% maleic anhydride; and
   (iii) from 0.0 to 25.0 wt.-% of other vinyl-copolymerizable monomers having no functional groups other than the vinyl function, based on the weight of the adhesion-promoting copolymer; and
from 0.1 to 5.0 wt.-% of a combination of the first UV-absorber with the second UV absorber;
from 0.0 to 5.0 wt.-% of one or several UV-stabilizers;
wherein the cumulative content of the polymethyl(meth)acrylate and of one or several impact modifiers in the layer E is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer E.

Advantageously, the layer E comprises, based on the total weight of the layer E:
from 0.0 to 99.9 wt.-% of a poly(methyl)methacrylate;
from 0.0 to 95.0 wt.-% of one or several impact modifiers;
from 0.1 to 5.0 wt.-% of a combination of the first UV-absorber with the second UV absorber;
from 0.0 to 5.0 wt.-% of one or several UV-stabilizers;
wherein the cumulative content of the polymethyl(meth)acrylate and of one or several impact modifiers in the layer E is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer E.

Depending on the envisaged purpose, the foil of the present invention may have a total thickness between 1.0 µm and 300.0 µm, more preferably between 1.0 µm and 200.0 µm, yet even more preferably between 30.0 µm and 150.0 µm.

The PMMA-based layer A typically has a thickness from 10.0 µm to 100.0 µm, preferably from 15.0 µm to 50.0 µm, more preferably from 20.0 µm to 40.0 µm.

The PMMA-based layer B commonly has a thickness from 10.0 µm to 80.0 µm, preferably from 15.0 µm to 50.0 µm, more preferably from 20.0 µm to 40.0 µm.

The adhesion-promoting layer C, if present, has a thickness from 1.0 µm to 20.0 µm, preferably from 2.0 µm to 15.0 µm, more preferably from 3.0 µm to 10.0 µm.

The fluoropolymer-based layer D, if present, has a thickness from 1.0 µm to 40.0 µm, preferably from 2.0 µm to 30.0 µm, more preferably from 3.0 µm to 20.0 µm.

The PMMA-based layer E, if present, has a thickness from 10.0 µm to 80.0 µm, preferably from 15.0 µm to 50.0 µm, more preferably from 20.0 µm to 40.0 µm.

The thickness of the foil of the present invention and of its layers can be determined by mechanical scanning according to the norm ISO 4593-1993. Preferably however, the thickness of the foil of the present invention and of its individual layers is determined using photomicrographs obtained using a scanning electron microscope such as JEOL JSM-IT300 (commercially available from JEOL GmbH, Freising, Germany). For this purpose, the foil samples can be frozen in liquid nitrogen, mechanically broken and the freshly obtained surfaces are analysed. For example, the measurement can be carried out using the following parameters:

| | |
|---|---|
| Current source: | variable flow of electrons from a tungsten filament (cathode) |
| Vacuum system: | rotary pump / oil diffusion pump |
| X-Y-Z-rotation-tilt: | totally motorized |
| Working distance (WD): | 5 to 70 mm (common: 10 mm) |
| Sample rotation: | 360° |
| Sample tilting: | - 5 to max. 90° (depending on WD) |
| Magnification: | 10 x to 300 000 x |
| Maximum resolution: | ∼ 3 nm |
| Detectors: | Secondary Electrons (SE) |
| | Back Scattered Electrons (BSE, 5 segments) |
| | Energy dispersive X-Ray Analysis (EDS) |

In summary, the multilayer foil of the present invention has the following order of layers:
- the fluoropolymer-based layer D, if present, is directly exposed to the environment;
- the PMMA-based layer A is located beneath the layer D;
- the PMMA-based layer E, if present, is located between the layer A and the layer B
- the PMMA-based layer B is located beneath the layer A or, if the layer E is present, beneath the layer E; and
- the adhesion-promoting layer C, if present, is located beneath the layer B.

The following embodiments of multilayer foils of the present invention showed particularly advantageous properties:
(1)
   - layer A comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination of at least two of those; and
   - layer B comprising a benzotriazole type UV absorber which is preferably selected from 2,2-methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture thereof.
(2)
   - layer D comprising glass beads dispersed in a fluoropolymer matrix;
   - layer A comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination of at least two of those; and
   - layer B comprising a benzotriazole type UV absorber which is preferably selected from 2,2-methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture thereof.
(3)
   - fluoropolymer based layer D, preferably comprising at least 80 wt.%, preferably at least 90 wt.-%, more preferably at least 95 wt.-%, even more preferably at least 99 wt.-% PVDF, based on the weight of the layer D;
   - layer A comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination of at least two of those; and
   - layer B comprising a benzotriazole type UV absorber which is preferably selected from 2,2-methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture thereof.
(4)
   - layer A comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination of at least two of those;
   - layer E comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination thereof and a benzotriazole type UV absorber which is preferably selected from 2,2-Methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture of at least two of those; and
   - layer B comprising a benzotriazole type UV absorber which is preferably selected from 2,2-methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture thereof.
(5)
   - layer D comprising glass beads dispersed in a fluoropolymer matrix;
   - layer A comprising a triazine type UV absorber as a first UV absorber, which is preferably selected from 6-[4,6-bis(4-phenylphenyl)-1,2-dihydro-1,3,5-triazin-2-ylidene]-3-[(2-ethylhexyl)oxy]cyclohexa-2,4-dien-1-one, 2-(4,6-diphenyl-1,3,5-triazin-2-yl)-5-((hexyl)oxy)phenol, 2-[4,6-bis(2,4-dimethylphenyl)-1,3,5-triazin-2-yl]-5-(octyloxy)phenol or a combination of at least two of those;
   - layer B comprising a benzotriazole type UV absorber which is preferably selected from 2,2-methylene-bis[6-(2*H*-benzotriazol-2-yl)-4-(1,1,3,3-tetramethylbutyl)phenol], 2-(2*H-*benzotriazol-2-yl)-4,6-bis(1-methyl-1-phenylethyl)phenol or a mixture thereof; and
   - layer C.

In the following, the individual components of the layers A, B, C, D and E will be described in a greater detail.

### Polymethyl(meth)acrylat

As already mentioned above, the PMMA-based layers A and B may comprise up to 99.9 wt.-% polymethyl (meth)acrylate (PMMA). PMMA is generally obtained by free-radical polymerization of mixtures which comprise methyl methacrylate. These mixtures generally comprise at least 40 wt.-%, preferably at least 60 wt.-%, particularly preferably at least 80 wt.-%, and even more preferably at least 90 wt.-%, based on the weight of the monomers, of methyl methacrylate (MMA).

The mixtures for production of PMMA can also comprise other (meth)acrylates copolymerizable with methyl methacrylate. The term *"(meth)acrylate"* as used herein is meant to encompass methacrylates, acrylates and mixtures thereof. (Meth)acrylates may derive from saturated alcohols, *e.g.* methyl acrylate, ethyl (meth)acrylate, propyl (meth)acrylate, *n*-butyl (meth)acrylate, *tert*-butyl (meth)acrylate, isobutyl (meth)acrylate, pentyl (meth)acrylate and 2-ethylhexyl (meth)acrylate; or from unsaturated alcohols, *e.g.* oleyl (meth)acrylate, 2-propynyl (meth)acrylate, allyl (meth)acrylate, vinyl (meth)acrylate; and also aryl (meth)acrylates, such as benzyl (meth)acrylate or phenyl (meth)acrylate, cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2-hydroxyethyl (meth)acrylate, 2-hydroxypropyl (meth)acrylate; glycol di(meth)acrylates, such as 1,4-butanediol (meth)acrylate, (meth)acrylates of ether alcohols, *e.g.* tetrahydrofurfuryl (meth)acrylate, vinyloxyethoxyethyl (meth)acrylate; amides and nitriles of (meth)acrylic acid, *e.g. N*-(3-dimethylaminopropyl)(meth)acrylamide, *N*-(diethylphosphono)-(meth)acrylamide, 1-methacryloylamido-2-methyl-2-propanol; sulphur-containing methacrylates, such as ethylsulphinylethyl (meth)acrylate, 4-thiocyanatobutyl (meth)acrylate, ethylsulphonylethyl (meth)acrylate, thiocyanatomethyl (meth)acrylate, methylsulphinylmethyl (meth)acrylate, bis((meth)acryloyloxyethyl) sulphide; polyfunctional (meth)acrylates, such as trimethyloylpropane tri(meth)acrylate.

The polymerization reaction is generally initiated by known free-radical initiators. Among the preferred initiators are *inter alia* the azo initiators well known to persons skilled in the art, *e.g.* AIBN and 1,1-azobiscyclohexanecarbonitrile, and peroxy compounds, such as methyl ethyl ketone peroxide, acetylacetone peroxide, dilauryl peroxide, *tert*-butyl 2-ethylperhexanoate, ketone peroxide, methyl isobutyl ketone peroxide, cyclohexanone peroxide, dibenzoyl peroxide, *tert*-butyl peroxybenzoate, *tert*-butylperoxy isopropyl carbonate, 2,5-bis(2-ethylhexanoylperoxy)-2,5-dimethylhexane, *tert*-butyl 2-ethylperoxyhexanoate, *tert*-butyl 3,5,5-trimethylperoxyhexanoate, dicumyl peroxide, 1,1-bis(*tert*-butylperoxy)cyclohexane, 1,1-bis(*tert*-butylperoxy)-3,3,5-trimethylcyclohexane, cumyl hydroperoxide, *tert*-butyl hydroperoxide, bis(4-*tert*-butylcyclohexyl) peroxydicarbonate, mixtures of two or more of the abovementioned compounds with one another and mixtures of the abovementioned compounds with compounds that have not been mentioned but which can likewise form free radicals.

The compositions to be polymerized can comprise not only the (meth)acrylates described above but also other unsaturated monomers which are copolymerizable with methyl methacrylate and with the abovementioned (meth)acrylates. Among these are *inter alia* 1-alkenes, such as 1-hexene, 1-heptene; branched alkenes, such as vinylcyclohexane, 3,3-dimethyl-1-propene, 3-methyl-1-diisobutylene, 4-methyl-1-pentene; acrylonitrile; vinyl esters, such as vinyl acetate; styrene, substituted styrenes having an alkyl substituent in the side chain, *e.g.* α-methylstyrene and α-ethylstyrene, substituted styrenes having an alkyl substituent on the ring, *e.g.* vinyltoluene and *p*-methylstyrene, halogenated styrenes, such as monochlorostyrenes, dichlorostyrenes, tribromostyrenes and tetrabromostyrenes; heterocyclic vinyl compounds, such as 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, *N*-vinylpyrrolidone, 2-vinylpyrrolidone, *N*-vinylpyrrolidine, 3-vinylpyrrolidine, *N*-vinylcaprolactam, *N*-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles; vinyl ethers and isoprenyl ethers; maleic acid derivatives, such as maleic anhydride, methylmaleic anhydride, maleimide, methylmaleimide; and dienes, such as divinylbenzene.

The amount of these comonomers generally used is from 0.0 wt.-% to 60.0 wt.-%, preferably from 0.0 to 40.0 wt.-% and particularly preferably from 0.0 to 20.0 wt.-%, based on the weight of monomers, and the compounds here can be used individually or in the form of a mixture.

Further preference is given to PMMA which is obtainable by polymerization of a composition having, as polymerizable constituents:
(a) from 50.0 to 99.9 wt.-%, preferably from 80.0 to 99.9 wt.-%, more preferably from 91.0 to 99.9 wt.-% of methyl methacrylate,
(b) from 0.1 to 50.0 wt.-%, preferably from 0.1 to 20.0 wt.-%, more preferably from 0.1 to 9.0 wt.-% of an acrylic acid ester of a C1-C4 alcohol,
(c) from 0.0 to 10.0 wt.-% of at least one further monomer copolymerizable with the monomers (a) and (b).

Use of the component (c) in the range from 8.0 to 10.0 wt.-%, the component (c) being preferably n-butyl acrylate, raises the intrinsic stability of the foil. As the proportion of the component (c) increases, the stability of the foil increases. However, an increase beyond the limiting values is disadvantageous.

In yet a further embodiment preference is given to PMMA composed of from 80.0 to 99.9 wt.% of methyl methacrylate and from 0.1 to 20.0 wt.-% of methyl acrylate, the amounts here being based on 100 wt.-% of the polymerizable constituents. Particularly advantageous copolymers are those obtainable by copolymerization of from 95.0 to 99.9 wt.-% of methyl methacrylate and from 0.1 to 5.0 wt.-% of methyl acrylate, where the amounts are based on 100 wt.-% of the polymerizable constituents. For instance, the PMMA may comprise 96.0 wt.-% of methyl methacrylate and 4.0 wt.-% of methyl acrylate, 98.0 wt.-% of methyl methacrylate and 2.0 wt.-% of methyl acrylate or 99.0 wt.-% of methyl methacrylate and 1.0 wt.-% of methyl acrylate. The Vicat softening points VSP (ISO 306-B50) of said PMMA is typically at least 90 °C, preferably from 95 °C to 112 °C.

The chain lengths of the PMMA polymers and its molecular weight can be adjusted by polymerization of the monomer mixture in the presence of molecular-weight regulators, particular examples being the mercaptans known for this purpose, *e.g. n*-butyl mercaptan, *n*-dodecyl mercaptan, 2-mercaptoethanol or 2-ethylhexyl thioglycolate, or pentaerythritol tetrathioglycolate; the amounts generally used of the molecular-weight regulators being from 0.05 to 5.0 wt.-%, based on the weight of the monomer mixture, preference being given to amounts of from 0.1 to 2.0 %wt.-% and particular preference being given to amounts of from 0.2 to 1.0 wt.-%, based on the monomer mixture (*cf*. H. Rauch-Puntigam, Th. Völker, "Acryl- und Methacrylverbindungen" ["Acrylic and Methacrylic Compounds"], Springer, Heidelberg, 1967; Houben-Weyl, Methoden der organischen Chemie, [Methods of Organic Chemistry], Vol. XIV/1, page 66, Georg Thieme, Heidelberg, 1961, or Kirk-Othmer, Encyclopedia of Chemical Technology, Vol. 1, pages 296 et seq., J. Wiley, New York, 1978).

The weight-average molar mass Mw of the PMMA employed is usually above 80 000 g/mol, determined by means of gel permeation chromatography (GPC with reference to PMMA as a calibration standard, as for all of the Mw determinations on the matrix PMMA), more preferably ≥ 120 000 g/mol. For the purposes of the invention, it is possible to achieve foils of even greater weathering resistance if the weight-average molar mass Mw of PMMA is above 140 000 g/mol. The weight-average molar mass Mw of the PMMA is generally in the range from 80 000 g/mol to 220 000 g/mol. Particularly good weathering resistances are obtained from foils with PMMA having an average molar mass Mw in the range from 80 000 g/mol to 180 000 g/mol, preferably in the range from 100 000 g/mol to 180 000 g/mol, more preferably in the range from 120 000 g/mol to 180 000 g/mol, in each case determined by means of GPC against PMMA calibration standards.

A particularly advantageous weathering stability and processability of the foil is observed if the polymethyl(meth)acrylate is PMMA having an average molar weight Mw of from 80 000 g/mol to 220 000 g/mol and is obtainable by polymerization of a composition whose polymerizable constituents comprise, based on the weight of the polymerisable composition:
(a) from 50.0 to 99.9 wt.-%, preferably from 80.0 to 99.9 wt.-%, more preferably from 91.0 to 99.9 wt.-% of methyl methacrylate,
(b) from 0.1 to 50.0 wt.-%, preferably from 0.1 to 20.0 wt.-%, more preferably from 0.1 to 9.0 wt.-% of an acrylic acid ester of a C1-C4 alcohol,
(c) from 0.0 to 10.0 wt.-% of at least one further monomer copolymerizable with the monomers (a) and (b).

Typically, the PMMA is not cross-linked and it therefore suitable for thermoplastic processing.

### Impact modifiers

Impact modifiers for use in the present invention *per se* are well known and may have different chemical compositions and different polymer architectures. The impact modifiers may be crosslinked or thermoplastic. In addition, the impact modifiers may be in particulate form, as core-shell or as core-shell-shell particles. Typically, particulate impact modifiers have an average particle diameter between 20 and 400 nm, preferably between 50 and 300 nm, more preferably between 100 and 285 nm and most preferably between 150 and 270 nm. *"Particulate"* in this context means crosslinked impact modifiers which generally have a core-shell or a core-shell-shell structure.

In the simplest case, the particulate impact modifiers are crosslinked particles obtained by means of emulsion polymerization whose average particle size is in the range from 10 to 150 nm, preferably from 20 to 100 nm, in particular from 30 to 90 nm. These are generally composed of at least 40.0 wt.-%, preferably from 50.0 to 70.0 wt.-% of methyl methacrylate, from 20.0 to 40.0 wt.-%, preferably from 25.0 to 35.0 wt.-% of butyl acrylate, and from 0.1 to 2.0 wt.-%, preferably from 0.5 to 1.0 wt.-% of a crosslinking monomer, *e.g.* a polyfunctional (meth)acrylate, *e.g.* allyl methacrylate and, if appropriate, other monomers, *e.g.* from 0.0 to 10.0 wt.-%, preferably from 0.5 to 5.0 % wt.-%, of C₁-C₄-alkyl methacrylates, such as ethyl acrylate or butyl methacrylate, preferably methyl acrylate, or other vinylically polymerizable monomers, *e.g.* styrene.

Preferred impact modifiers are polymer particles which can have a two- or three-layer core-shell structure and are obtained by emulsion polymerization (see, for example, EP-A 0 113 924, EP-A 0 522 351, EP-A 0 465 049 and EP-A 0 683 028). The present invention typically requires suitable particle sizes of these emulsion polymers in the range from 10 to 150 nm, preferably from 20 to 120 nm, particularly preferably from 50 to 100 nm.

A three-layer or three-phase structure with a core and two shells can prepared as follows. The innermost (hard) shell can, for example, be composed in essence of methyl methacrylate, of small proportions of comonomers, *e.g.* ethyl acrylate, and of a proportion of crosslinking agent, *e.g.* allyl methacrylate. The middle (soft) shell can, for example, be composed of butyl acrylate and, if appropriate, styrene, while the outermost (hard) shell is in essence the same as the matrix polymer, thus bringing about compatibility and good linkage to the matrix. The proportion of polybutyl acrylate in the impact modifier is decisive for the impact-modifying action and is preferably in the range from 20.0 to 40.0 wt.-%, particularly preferably in the range from 25.0 to 35.0 wt.-%.

A further preference is given to use of a system known in principle from EP 0 528 196 A1 which is a two-phase impact-modified polymer composed of:
a1) from 10.0 to 95.0 wt.-% of a coherent hard phase whose glass transition temperature Tg is above 70°C, composed of
a11) from 80.0 to 100 wt.-% (based on a1) of methyl methacrylate and
a12) from 0.0 wt.-% to 20.0 wt.-% of one or more other ethylenically unsaturated monomers capable of free-radical polymerization, and
a2) from 90.0 to 5.0 wt.-% of a tough phase whose glass transition temperature Tg is below -10°C, distributed in the hard phase and composed of
a21) from 50.0 to 99.5 wt.-% of a C₁-C₁₀-alkyl acrylate (based on a2)
a22) from 0.5 to 5.0 wt.-% of a crosslinking monomer having two or more ethylenically unsaturated radicals which are capable of free-radical polymerization, and
a23) if appropriate, other ethylenically unsaturated monomers capable of free-radical polymerization,
where at least 15.0 wt.-% of the hard phase a1) has a covalent linkage to the tough phase a2).

The two-phase impact modifier can be produced by a two-stage emulsion polymerization reaction in water, as described by way of example in DE-A 38 42 796. In the first stage, the tough phase a2) is produced and is composed of at least 50.0 wt.-%, preferably more than 80.0 wt.-%, of lower alkyl acrylates, thus giving a glass transition temperature Tg below -10 °C for this phase. Crosslinking monomers a22) used comprise (meth)acrylates of diols, *e.g.* ethylene glycol dimethacrylate or 1,4-butanediol dimethacrylate, aromatic compounds having two vinyl or allyl groups, *e.g.* divinylbenzene, or other crosslinking agents having two ethylenically unsaturated radicals which are capable of free-radical polymerization, *e.g.* allyl methacrylate, as graft-linking agent. Crosslinking agents that may be mentioned by way of example and have three or more unsaturated groups which are capable of free-radical polymerization, *e.g.* allyl groups or (meth)acrylic groups, are triallyl cyanurate, trimethylolpropane triacrylate and trimethylolpropane tri(meth)acrylate, and pentaerythrityl tetraacrylate and pentaerythrityl tetra(meth)acrylate. US 4,513,118 gives further examples thereof.

The ethylenically unsaturated monomers capable of free-radical polymerization and mentioned under a23) can, by way of example, be acrylic or methacrylic acid or else their alkyl esters having from 1 to 20 carbon atoms but not mentioned above, and the alkyl radical here can be linear, branched or cyclic. Furthermore, a23) can comprise further aliphatic comonomers which are capable of free-radical polymerization and which are copolymerizable with the alkyl acrylates a21). However, the intention is to exclude significant proportions of aromatic comonomers, such as styrene, α-methylstyrene or vinyltoluene, since they lead to undesired properties of the resulting product - especially on weathering.

When the tough phase is produced in the first stage, careful attention has to be paid to the setting of the particle size and its polydispersity. The particle size of the tough phase here is in essence dependent on the concentration of the emulsifier. The particle size can advantageously be controlled by the use of a seed latex. Particles whose average (weight-average) particle size is below 130 nm, preferably below 70 nm, and whose particle-size polydispersity P₈₀ is below 0.5 (P₈₀ being determined from cumulative evaluation of the particle-size distribution determined by ultracentrifuge; the relationship is: P₈₀ = [(r₉₀ - r₁₀]/r₅₀]- 1, where r₁₀, r₅₀, r₉₀ = average cumulative particle radius, being the value which is greater than 10, 50, 90% of the particle radii and is smaller than 90, 50, 10% of the particle radii), preferably below 0.2, are achieved using emulsifier concentrations of from 0.15 to 1.0 wt.-%, based on the aqueous phase. This applies especially to anionic emulsifiers, examples being the particularly preferred alkoxylated and sulphated paraffins. Examples of polymerization initiators used are from 0.01 to 0.5 wt.-% of alkali metal peroxodisulphate or ammonium peroxodisulphate, based on the aqueous phase, and the polymerization reaction is initiated at temperatures of from 20 to 100 °C. Preference is given to use of redox systems, an example being a combination composed of from 0.01 to 0.05 wt.-% of organic hydroperoxide and from 0.05 to 0.15 wt.-% of sodium hydroxymethylsulphinate, at temperatures of from 20 to 80°C.

The glass transition temperature of the hard phase a1) of which at least 15 wt.-% has covalent bonding to the tough phase a2) is at least 70 °C and this phase can be composed exclusively of methyl methacrylate. Up to 20 wt.-% of one or more other ethylenically unsaturated monomers which are capable of free-radical polymerization can be present as comonomers a12) in the hard phase, and the amount of alkyl (meth)acrylates used here, preferably alkyl acrylates having from 1 to 4 carbon atoms, is such that the glass transition temperature is not below the glass transition temperature mentioned above.

The polymerization of the hard phase a1) proceeds likewise in emulsion in a second stage, using the conventional auxiliaries, for example those also used for polymerization of the tough phase a2).

Thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

There are various classes of thermoplastic impact modifiers. One example thereof are aliphatic TPUs (thermoplastic polyurethanes) *e.g.* Desmopan® products commercially available from Covestro AG. For instance, the TPUs Desmopan® WDP 85784A, WDP 85092A, WDP 89085A and WDP 89051D, all of which have refractive indices between 1.490 and 1.500, are particularly suitable as impact modifiers.

A further class of thermoplastic polymers for use according in the foil of the present invention as impact modifiers are methacrylate-acrylate block copolymers, especially acrylic TPE, which comprises PMMA-poly-n-butyl acrylate-PMMA triblock copolymers, and which are commercially available under the Kurarity® product name by Kuraray. The poly-n-butyl acrylate blocks form nanodomains in the polymer matrix having a size between 10 and 20 nm.

### UV absorbers

The present invention is based on a surprising finding that by placing different UV absorbers in separate PMMA-based layers the weathering stability of the resulting multilayer foil can be dramatically improved. The choice of the first UV absorber and of the second UV absorber is thereby particularly important.

The first UV absorber in the layer A is a triazine type UV absorber. The first UV absorber and its amount in the layer A is selected in such a way that the spectral transmittance of the layer A at any wavelength λ_{A} is not more than 10%; wherein 270 nm ≤ λ_{A} ≤ 360 nm.

The first UV absorber is triazine type UV absorber, whereby 2-(2-hydroxyphenyl)-1,3,5-triazines are particularly preferred. Preferably used 2-(2-hydroxyphenyl)-1,3,5-triazines include *inter alia* 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)- 1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1 -oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine. Triazine type UV absorbers such as 2-(4,6-diphenyl-1,3,5-triazin-2-yl)-5-hexyloxyphenol, can also be used. These compounds are *e.g.* commercially available from BASF SE (Ludwigshafen, Germany) under trademarks Tinuvin® 1600, Tinuvin® 1577 or Tinuvin® 1545. The amounts of the triazine type UV absorber in the layer A are from 0.1 to 5.0 wt.-%, preferably from 0.2 to 3.0 wt.-% and very particularly preferably from 0.5 to 2.0 wt.-%, based on the weight of the layer A. It is also possible to use mixtures of different triazine type UV absorbers.

According to the present invention, the second UV absorber in the layer B is distinct from the first UV absorber in the layer A. The second UV absorber and its amount in the layer B is selected in such a way that the spectral transmittance of the layer B at any wavelength λ_{B} is not more than 10%; wherein 270 nm ≤ λ_{B} ≤ 370 nm. Preferably, the optical transmittance of the layer B at the wavelength of 370 nm is not more than 10%.

The second UV absorber is a benzotriazole type UV absorber. A combination of a triazine type compound as a first UV absorber in the layer A with a benzotriazole type compound as a second UV absorber in the layer B surprisingly led to a particularly high weathering stability of the multi-layer foil of the present invention. For instance, the layer A may comprise from 0.5 to 3.0 wt.-%, based on the weight of the layer A, of a triazine type compound as a first UV absorber; the layer B may comprise from 0.5 to 4.0 wt.-%, based on the weight of the layer B, of a benzotriazole type compound as a second UV absorber.

Benzotriazole type UV absorbers are known in the prior art and are typically 2-(2'-hydroxyphenyl)benzotriazoles. The corresponding compounds include in particular 2-(2'-hydroxy-5'-methylphenyl)-benzotriazole, 2-(3',5'-di-*tert*-butyl-2'-hydroxyphenyl)benzotriazole, 2-(5'-*tert*-butyl-2'-hydroxyphenyl)benzotriazole, 2-(2'-hydroxy-5'-(1,1,3,3-tetramethylbutyl)phenyl)benzotriazole, 2-(3',5'-di-*tert*-butyl-2'-hydroxyphenyl)-5-chloro-benzotriazole, 2-(3'-*tert*-buty1-2'-hydroxy-5'-methylphenyl)-5-chloro-benzotriazole, 2-(3'-*sec*-butyl-5'-*tert*-butyl-2'-hydroxyphenyl)benzotriazole, 2-(2'-hydroxy-4'-octyloxyphenyl)benzotriazole, 2-(3',5'-di-*tert*-amyl-2'-hydroxyphenyl)benzotriazole, 2-(3',5'-bis-(α,α-dimethylbenzyl)-2'-hydroxyphenyl)benzotriazole, 2-(3'-*tert*-butyl-2'-hydroxy-5'-(2-octyloxycarbonylethyl)phenyl)-5-chloro-benzotriazole, 2-(3'-*tert*-butyl-5'-[2-(2-ethylhexyloxy)-carbonylethyl]-2'-hydroxyphenyl)-5-chloro-benzotriazole, 2-(3'-*tert*-butyl-2'-hydroxy-5'-(2-methoxycarbonylethyl)phenyl)-5-chloro-benzotriazole, 2-(3'-*tert*-butyl-2'-hydroxy-5'-(2-met*H-*oxycarbonylethyl)phenyl)benzotriazole, 2-(3'-*tert*-butyl-2'-hydroxy-5'-(2-octyloxycarbonylethyl)phenyl)benzotriazole, 2-(3'-*tert*-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-*tert*-butyl-2'-hydroxy-5'-(2-isooctyloxy-carbonylethyl)phenylbenzotriazole, 2,2'-methylene-bis[4-(1,1,3,3-tetramethylbutyl)-6-benzotriazole-2-ylphenol]; the transesterification product of 2-[3'-*tert*-butyl-5'-(2-methoxycarbonylethyl)-2'-hydroxyphenyl]-2*H*-benzotriazole with polyethylene glycol 300; [R-CH₂CH₂-COO-CH₂CH₂- , where R = 3'-*tert*-butyl-4'-hydroxy-5'-2*H*-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole. Further examples of UV absorbers of benzotriazole type that can be used are 2-(2-hydroxy-5-methylphenyl)benzotriazole, 2-[2-hydroxy-3,5-di(α,α-dimethylbenzyl)phenyl]benzotriazole, 2-(2-hydroxy-3,5-di-*tert-*butylphenyl)benzotriazole, 2-(2-hydroxy-3,5-butyl-5-methylphenyl)-5-chlorobenzotriazole, 2-(2-hydroxy-3,5-di-*tert*-butylphenyl)-5-chlorobenzotriazole, 2-(2-hydroxy-3,5-di-*tert-*amylphenyl)benzotriazole, 2-(2-hydroxy-5-*tert*-butylphenyl)benzotriazole, 2-(2-hydroxy-3-*sec*-butyl-5-*tert*-butylphenyl)benzotriazole and 2-(2-hydroxy-5-*tert*-octylphenyl)benzotriazole, phenol, 2,2'-methylenebis[6-(2*H*-benzotriazol-2-yl)-4-(1,1,3,3-tetramethylbutyl)]. These compounds are commercially available from BASF SE (Ludwigshafen, Germany) *e.g.* as Tinuvin® 360 and Tinuvin® 234.

The amounts the benzotriazole type UV absorber in the layer B of are from 0.1 to 5.0 wt.-%, preferably from 0.2 to 4.0 wt.-% and very particularly preferably from 0.5 to 3.0 wt.-%, based on the weight of the PMMA-based layer B. It is also possible to use mixtures of different benzotriazole type UV absorbers.

### Further additives

The layers A, B and C of the foil of the present invention further contain one or more UV stabilisers selected from hindered amine light stabilisers (HALS) and antioxidants.

Sterically hindered amines, HALS (Hindered Amine Light Stabilizer) UV stabilizers are per se known. They can be used to inhibit ageing phenomena in paints and plastics, especially in polyolefin plastics (Kunststoffe, 74 (1984) 10, pp. 620-623; Farbe + Lack, Volume 96, 9/1990, pp. 689-693). The tetramethylpiperidine group present in the HALS compounds is responsible for the stabilizing effect. This class of compound can have no substitution on the piperidine nitrogen or else substitution by alkyl or acyl groups on the piperidine nitrogen. The sterically hindered amines do not absorb in the UV region. They scavenge free radicals that have been formed, whereas the UV absorbers cannot do this. Examples of HALS compounds which have stabilizing effect and which can also be used in the form of mixtures are: bis(2,2,6,6-tetramethyl-4-piperidyl) sebacate, 8-acetyl-3-dodecyl-7,7,9,9-tetramethyl-1,3,8-triazaspiro(4,5)-decane-2,5-dione, bis(2,2,6,6-tetramethyl-4-piperidyl) succinate, poly(*N*-β-hydroxyethyl-2,2,6,6-tetramethyl-4-hydroxypiperidine succinate) or bis(*N*-methyl-2,2,6,6-tetramethyl-4-piperidyl) sebacate.

The amounts used of the HALS compounds in the layers are typically from 0.0 to 5.0 wt.-%, preferably from 0.1 to 3.0 wt.-% and very particularly preferably from 0.2 to 2.0 wt.-%, based on the weight of the layer. It is also possible to use mixtures of different HALS compounds.

Other co-stabilizers that can be used are the HALS compounds described above, disulphites, such as sodium disulphite, and sterically hindered phenols and phosphites. Such co-stabilizers may be present in a concentration of 0.1 to 5.0 wt.-%, based on the weight of each layer.

Sterically hindered phenols are also suitable for use in the foil of the present invention. Preferred sterically hindered phenols include *inter alia* 6-*tert*-butyl-3-methylphenyl derivatives, 2,6-di-*tert-*butyl-*p*-cresol, 2,6-*tert*-butyl-4-ethyl phenol, 2,2'-methylenebis-(4-ethyl-6-*tert*-butyl phenol), 4,4'-butylidenebis(6-*tert*-butyl-*m*-cresol), 4,4'-thiobis(6-*tert*-butyl-*m*-cresol), 4,4'-dihydroxy diphenyl cyclohexane, alkylated bisphenol, styrenated phenol, 2,6-di-*tert*-butyl-4-methyl phenol, *n*-octadecyl-3-(3',5'-di-*tert-*butyl-4'-hydroxy phenyl)propionate, 2,2'-methylenebis(4-methyl-6-*tert*-butyl phenol), 4,4'-thiobis(3-methyl-6-*tert*-butylphenyl), 4,4'-butylidenebis(3-methyl-6-*tert*-butylphenol), stearyl-β(3,5-di-4-butyl-4-hydroxy phenyl)propionate, 1,1,3-tris(2-methyl-4-hydroxy-5-*tert-*butylphenyl)butane, 1,3,5-trimethyl-2,4,6-tris(3-5-di-*tert*-butyl-4hydroxybenzyl)benzene, tetrakis-[methylene-3(3',5'-di-*tert*-butyl-4'-hydroxyphenyl)propionate]methane. Commercially available sterically hindered phenols include Sumilizer™ BHT BP-76, WXR, GA-80 and BP-101 (Sumitomo Chemical, Osaka, Japan), Irganox® 1076, 565, 1035, 1425WL, 3114, 1330 and 1010 (BASF SE, Ludwigshafen, Germany), MARK AO-50,-80, -30, -20, -330 and -60 (ADEKA Polymer Addtives, Mulhouse, France), and Tominox® SS, TT (Mitsubishi Chemical Corporation, Yoshitomi, Japan).

### Adhesion-promoting copolymer

The adhesion-promoting copolymer in the layer B and/or in the layer C, if layer C is present, comprises:
(i) from 70.0 to 95.0 wt.-% methyl methacrylate;
(ii) from 0.5 to 15.0 wt.-% maleic anhydride; and
(iii) from 0.0 to 25.0 wt.-% of other vinyl-copolymerizable monomers having no functional groups other than the vinyl function, based on the weight of the adhesion-promoting copolymer.

The monomers (i) are selected from the group of alkyl(meth)acrylates having 1 to 6 carbon atoms in the ester group such as ethylmethacrylate, propylmethacrylate, isopropylmethacrylate, butylmethacrylate, isobutylmethacrylate, *tert*-butylmethacrylate, pentylmethacrylate, isopentylmethacrylate, hexylmethacrylate, 2,2-dimethylbutylmethacrylate, cyclopentylmethacrylate, and cyclohexylmethacrylate as well as the particularly preferred methylmethacrylate.

The monomers (iii) can be selected from a group of vinyl aromatic substances such as α-halogen styrene, *p*-methylstyrene, *p-tert*-butylstyrene, vinylnaphthalene, as well as, preferably, α-methyl styrene and styrene, wherein styrene is particularly preferred.

The adhesion-promoting monomers (ii) are those monomers capable of free-radical polymerization which have functional groups which can interact with the materials to be coated. This interaction is to be brought about at least via a chemical (covalent) bond. In addition, it may be promoted, by way of example, by hydrogen bonding, complexing, dipole forces or thermodynamic compatibility (intertwining of the polymer chains) or the like. These interactions generally involve heteroatoms, such as nitrogen or oxygen. Functional groups which may be mentioned are the amino group, in particular the dialkylamino group, (cyclic) amide group, imide group, hydroxy group, (ep)oxy group, carboxy group, (iso)cyano group, carboxylic acid group, anhydride group or imido group. These monomers are known per se (*cf*. H. Rauch Puntigam, Th. Völker, Acryl und Methacrylverbindungen, Springer-Verlag 1967; Kirk-Othmer, Encyclopedia of Chemical Technology, 3rd. Ed., Vol. 1, pp. 394-400, J. Wiley 1978; DE-A25 56 080; DE-A 26 34 003).

The adhesion-improving monomers therefore preferably belong to the monomer class of the nitrogen-containing vinyl heterocycles preferably having 5-membered rings alongside 6-membered rings, and/or of the copolymerizable vinylic carboxylic acids and/or of the hydroxyalkyl-, alkoxyalkyl-, epoxy- or aminoalkyl substituted esters, anhydrides or amides of fumaric, maleic, itaconic, acrylic, or methacrylic acid. Nitrogen-heterocyclic monomers which may particularly be mentioned are those from the class of the vinylimidazoles, of the vinyllactams, of the vinylcarbazoles, and of the vinylpyridines. Examples of these monomeric imidazole compounds, which are not intended to represent any form of restriction, are *N*-vinylimidazole (also termed vinyl-1-imidazole), *N-*vinylmethyl-2-imidazole, *N*-vinylethyl-2-imidazole, *N*-vinylphenyl-2-imidazole, *N*-vinyldimethyl-2,4-imidazole, *N*-vinylbenzimidazole, *N*-vinylimidazoline (also termed vinyl-1-imidazoline), *N-*vinylmethyl-2-imidazoline, *N*-vinylphenyl-2-imidazoline and vinyl-2-imidazole.

Particular examples which may be mentioned of monomers derived from the lactams are compounds such as the following: *N*-vinylpyrrolidone, *N*-vinylmethyl-5-pyrrolidone, *N*-vinylmethyl-3-pyrrolidone, *N*-vinylethyl-5-pyrrolidone, *N*-vinyldimethyl-5,5-pyrrolidone, *N*-vinylphenyl-5-pyrrolidone, *N*-allylpyrrolidone, *N*-vinylthiopyrrolidone, *N*-vinylpiperidone, *N*-vinyldiethyl-6,6-piperidone, *N*-vinylcaprolactam, *N*-vinylmethyl-7-caprolactam, *N*-vinylethyl-7-caprolactam, *N-*vinyldimethyl-7,7-caprolactam, *N*-allylcaprolactam, *N*-vinylcaprylolactam.

Among the monomers which derive from carbazole mention may particularly be made of: *N-*vinylcarbazole, *N-*allycarbazole, *N*-butenylcarbazole, *N*-hexenylcarbazole and *N*-(methyl-1-ethylene)carbazole. Among the copolymerizable vinylic carboxylic acids, mention may in particular be made of maleic acid, fumaric acid, itaconic acid and suitable salts, esters or amides of the same. Mention may also be made of the following epoxy-, oxy or alkoxy-substituted alkyl esters of (meth)acrylic acid: glycidyl methacrylate, 2-hydroxyethyl (meth)acrylate, hydroxypropyl (meth)acrylate, 2-methoxyethyl (meth)acrylate, 2-ethoxyethyl (meth)acrylate, 2-butoxyethyl (meth)acrylate, 2-(2-butoxyethoxy)ethyl methacrylate, 2-(ethoxyethyloxy)ethyl (meth)acrylate, 4-hydroxybutyl(meth)acrylate, 2-[2-(2-ethoxyethoxy)ethoxy]ethyl(meth)acrylate, 3-methoxybutyl-1-(meth)acrylate, 2-alkoxymethylethyl (meth)acrylate, 2-hexoxyethyl(meth)acrylate.

Mentioned may also be the following amine-substituted alkyl esters of (meth)acrylic acid: 2-dimethylaminoethyl (meth)acrylate, 2-diethylaminoethyl, (meth)acrylate, 3-dimethylamino-2,2-dimethylpropyl 1-(meth)acrylate, 3-dimethylamino-2,2-dimethylpropyl 1-(meth)acrylate, 2-morpholinoethyl(meth)acrylate, 2-*tert*-butylaminoethyl (meth)acrylate, 3-(dimethylamino)propyl (meth)acrylate, 2-(dimethylaminoethoxyethyl)(meth)acrylate.

Mention may be made by may of example of the following monomers which are representatives of the (meth)acrylamides: *N*-methyl(meth)acrylamide, *N*-dimethylaminoethyl(meth)-acrylamide, *N-*dimethylaminopropyl(meth)acrylamide, *N*-isopropyl(meth)acrylamide, *N-tert*-butyl(meth)-acrylamide, *N*-isobutyl(meth)acrylamide, *N*-decyl(meth)-acrylamide, *N*-cyclohexyl(meth)acrylamide, *N*-[3-(dimethylamino)-2,2-dimethylpropyl]methacrylamide, *N*-[2-hydroxyethyl](meth)acrylamide.

It is particularly advantageous to use *"adhesion promoting monomers"* (ii) selected from the group consisting of GMA (glycidyl methacrylate), maleic acid derivatives, such as maleic acid, maleic anhydride (MA), methylmaleic anhydride, maleimide, methylmaleimide, maleamides (MAs), phenylmaleimide and cyclohexylmaleimide, fumaric acid derivatives, methacrylic anhydride, acrylic anhydride.

Preferably, the adhesion-promoting monomer (ii) is maleic anhydride.

The alkylacrylates (iv) may be optionally incorporated in amounts of up to 5.0 wt.-% to improve the rheological properties of the adhesion-promoting copolymer. Alkylacrylates having 1 to 6 carbon atoms in the ester group may be, for example, ethylacrylate, isopropylacrylate, propylacrylate, isobutylacrylate, *tert*-butylacrylate, pentylacrylate, hexylacrylate as well as, preferably, butylacrylate and the especially preferred methylacrylate.

In a preferred embodiment, the adhesion-promoting copolymer comprises:
(i) from 50.0 to 95.0 wt.-%, preferably 60.0 to 90.0 wt.-%, more preferably from 70.0 to 85.0 wt.-%, even more preferably 70 to 80 wt.-% methyl methacrylate;
(ii) from 0.2 to 25.0 wt.-%, preferably from 0.5 to 20.0 wt.-%, more preferably from 1.0 to 15.0 wt.-% and even more preferably 5.0 to 12.0 wt.-% maleic anhydride; and
(iii) from 0.0 to 25.0 wt.-%, preferably from 2.0 to 15.0 wt.-% of other vinyl-copolymerizable monomers having no functional groups other than the vinyl function, based on the weight of the copolymer.

In a particularly preferred embodiment, the adhesion-promoting copolymer is a copolymer of MMA, styrene and maleic anhydride.

The adhesion-promoting copolymer may be obtained in a manner known per se via free-radical polymerization. By way of example, EP 264 590 A1 describes a process for preparing a copolymer from a monomer mixture composed of methyl methacrylate, vinylaromatic compound, maleic anhydride and, where appropriate, from a lower alkyl acrylate, by carrying out the polymerization to 50 % conversion in the presence or absence of a non-polymerizable organic solvent, and continuing the polymerization beyond a conversion of at least 50 % in the temperature range from 75 to 150 °C in the presence of an organic solvent to at least 80 % conversion, and then evaporating the low-molecular-weight volatile constituents.

JP-A 60-147 417 describes a process for preparing a copolymer by feeding, at a temperature of from 100 to 180°C, a monomer mixture composed of methyl methacrylate, maleic anhydride and at least one vinylaromatic compound into a polymerization reactor suitable for solution polymerization or bulk polymerization, and polymerizing the material. DE-A 44 40 219 describes a further preparation process.

The adhesion-promoting copolymers described in EP 264 590 A1 and JP-A 60-147 417 may be advantageously used in the foil of the present invention.

### Fluoropolymer

Depending on the intended use of the foil of the present invention the fluoropolymer may be selected from polyvinylidene fluoride (PVDF), polyvinylfluoride (PVF), polytetrafluorethylene (PTFE), polyethylenetetrafluoroethylene (ETFE), fluorinated ethylene-propylene (FEP) or a mixture or copolymers thereof. In order to additionally improve weathering stability of the foil of the present invention, the fluoropolymer may further comprise copolymerised UV absorbing agents.

The PVDF polymers used in the foil are generally transparent, semicrystalline, thermoplastic fluoroplastics. Advantageously, the PVDF has a high crystalline fusing point. The heat resistance of the foil is particularly high when, the crystalline fusing point of the PVDF is at least 150 °C and more preferably at least 160 °C. The upper limit of the crystalline fusing point is preferably approximately 175 °C, which is equal to the crystalline fusing point of PVDF. It is further preferred that the weight average molecular weight Mw of the PVDF ranges from 50 000 to 300 000 g/mol, more preferably from 80 000 to 250 000 g/mol, even more preferably from 150 000 to 250 000 g/mol as determined by GPC.

The fundamental unit for PVDF is vinylidene fluoride, which is polymerized by means of a specific catalyst to give PVDF in high-purity water under controlled conditions of pressure and of temperature. Vinylidene fluoride is obtainable by way of example from hydrogen fluoride and methylchloroform as starting materials, using chlorodifluoroethane as precursor. In principle, any commercial grade of PVDF such as Kynar® grades produced by Arkema, Dyneon® grades produced by Dyneon, or Solef® grades produced by Solvay is suitable for use in the present invention. For instance, the following commercial products may be employed: Kynar® 720 (vinylidene fluoride content: 100 wt.-%, crystalline fusing point: 169 °C) and Kynar® 710 (vinylidene fluoride content: 100 wt.-%, crystalline fusing point: 169 °C) manufactured by ARKEMA; T850 (vinylidene fluoride content: 100 wt.-%, crystalline fusing point: 173 °C) manufactured by KUREHA Corporation; Solef® 1006 (vinylidene fluoride content: 100 wt.-%, crystalline fusing point: 174 °C) and Solef® 1008 (trade name) (vinylidene fluoride content: 100 wt.-%, crystalline fusing point: 174 °C) manufactured by Solvay Solexis.

PVDF has 3 linkage modes as linkage modes of monomer: head to head linkage; tail to tail linkage; and head to tail linkage, in which the head to head linkage and the tail to tail linkage are referred to as *"hetero linkage".* The chemical resistance of the layer A is particularly high when the *"rate of hetero linkage"* in the PVDF is not greater than 10 mol.-%. From the viewpoint of lowering the rate of hetero linkage, the PVDF is preferably a resin produced by suspension polymerization.

The rate of hetero linkage can be determined from a peak of a ¹⁹F-NMR spectrum of the PVDF as specified in EP 2 756 950 A1.

Typically, the fluoropolymer is not cross-linked and it therefore suitable for thermoplastic processing.

The PVDF may include a flatting agent to such a degree that the transparency of the layer A is not deteriorated. As the flatting agent, an organic flatting agent and an inorganic flatting agent can be used.

In one embodiment, the fluoropolymer is a predominantly amorphous, or a microcrystalline PVDF with a haze value smaller than 5. The haze value is measured for this purpose on a pure fluoropolymer (PVDF) foil of thickness 30 µm at 23°C in accordance with ASTM D1003. Examples of types of PVDF having particularly good suitability with appropriately low haze value are Solef® 6008 from Solvay, T850 from Kureha and Kynar® 9000HD from Arkema.

### Glass beads

The fluoropolymer-based layer D, if present, may optionally comprise glass beads. In this embodiment, the content of the glass beads dispersed in the polymeric matrix of the layer D is usually from 3.0 to 30.0 wt.-%, more preferred from 5.0 to 20.0 wt.-%, and particularly preferred from 7.0 to 15.0 wt.-%, based on the total weight of the layer D.

Furthermore, glass beads may be used as a first UV absorber in the layer A.

The glass beads may have an aspect ratio of at least about 4 : 1, more preferably at least about 2 : 1. Ideally, the glass beads are substantially spherical *i.e.* have an aspect ratio of about 1 : 1.

The glass beads advantageously have a narrow size distribution. The size distribution may be measured by conventional apparatus such as a Malvern particle size analyzer *e.g.* by Mastersizer 2000. Typically, the glass beads are solid (*i.e.* non-hollow) glass beads, are not limited to any chemical composition and can have either a smooth surface or an etched surface. The surface etching can be conveniently performed by contacting the glass beads with nitric acid for a time sufficient to give the desired degree of etching of the surface. For achieving an optimal adhesion between the glass beads and the fluoropolymer-based matrix, the glass beads may also have a siloxane layer.

Depending on the desired optical properties of the foil and the desired surface roughness, the size of the glass beads (average diameter, weight averaged) is typically chosen to be from 2.0 µm to 30.0 µm, preferably from 3.0 µm to 20.0 µm, even more preferably from 5.0 µm to 15.0 µm. Typically, if glass beads with an average diameter below 2.0 µm are used, the surface of the resulting foil no longer appears matt. On the other hand, use of glass beads having an average diameter above 30.0 µm leads to a relatively high surface roughness, which is undesirable for many applications.

The size of the glass beads - indicated as so-called d₅₀-value (that is 50 percent by volume of the particles have a particle size below the specified average particle size) can be measured in accordance with the standard norm for laser diffraction measurements ISO 13320 (2009). Typically, the size of the glass beads is determined in each case (at a dispersion of the particles in butyl acetate refractive index: 1,462) by laser light scattering (at room temperature 23 °C) using a Malvern Mastersizer 2000 from Malvern Instruments with the mini-dispersing MS1 at 2000 revolutions per minute and evaluation by Fraunhofer. A further equally suitable instrument for this purpose is Beckman Coulter LS 13 320 laser diffraction particle size analyser.

For the sake of achieving good mechanical properties of the foil, the glass beads are preferably non-hollow *i.e.* solid.

The refractive index of the glass beads, measured for the Na-D line (589 nm) at 20 °C is selected to differ from the refractive index of the polymeric material matrix in the fluoropolymer-based layer A by from 0.01 to 0.2 units.

The chemical composition of the glass beads is not particularly limited and substantially any commercially available sorts of glass can be employed. These include in particular fused silica glass, soda-lime-silica glass, sodium borosilicate glass, lead-oxide glass, aluminosilicate glass and oxide glass, wherein use of a soda-lime-silica glass is particularly preferred.

The refractive index of a soda-lime-silica glass is usually from 1.51 to 1.52. In a particularly preferred embodiment, the glass beads have the following composition:
from 70.0 to 75.0 wt.% SiO₂
from 12.0 to 15.0 wt.% Na₂O
from 0.0 to 1.5 wt.% K₂O
from 7.0 to 12.0 wt.% CaO
from 0.0 to 5.0 wt.% MgO
from 0.1 to 2.5 wt.% Al₂O₃
from 0.0 to 0.5 wt.% Fe₂O₃

Examples of suitable glass beads are Spheriglass® products such as Spheriglass® 7025 and Spheriglass® 5000 available from Potters Industries LLC. or Omicron® glass beads Omicron® NP3 and Omicron® NP5 obtainable from Sovitec Mondial S.A. Furthermore, use of coloured glass beads having a particle size below 10 µm is particularly advantageous in terms of efficient UV absorption and high degree of transmission of visible light. Although the choice of the glass for this purpose is not particularly limited, glass sorts such as GG395, GG400, GG420, GG435, GG475, OG515, OG 530, available from Schott AG (Mainz, Germany) showed to be particularly useful.

### Properties of the foil

Typically, the foil of the present invention has an average transmittance of not more than 40%, preferably not more than 30%, more preferably not more than 10% in a wavelength interval from 350 nm to 390 nm.

As already outlined above, the foil of the present invention has excellent weathering stability and mechanical properties. In particular, the elongation at break of the foil, measured by a common method such as the one described in the norm ISO 527-3 (2003), after accelerated weathering testing for 6 000 h, performed according to the norm ISO 4892-2, method A, cycle 1 (2013), is at least 60%, preferably at least 70%, even more preferably at least 90% of the initial elongation at break of the foil.

Furthermore, despite using relatively small amounts of the first and the second UV absorbers in the multilayer film, after accelerated weathering testing for 15 000 h (30 GJ/m² radiant exposure), according to the norm ISO 4892-2 (2013), method A, cycle 1, the spectral transmittance of the foil at any wavelength λ is usually is not more than 10%, preferably not more than 5%, more preferably not more than 2%, even more preferably not more than 1%; wherein 270 nm ≤ λ ≤ 370 nm.

The weathering test is carried out according to the norm DIN EN ISO 4892-2 (2013), method A with cycle 1 under the following conditions:

| | |
|---|---|
| Exposure period (dry / water spray) [min] | 102/18 |
| Black standard temperature [°C] | 65 +/- 3 |
| Irradiance (300 - 400nm) [W/m²] | 60 +/- 2 |
| Relative humidity [%] | 65 +/-10 |
| Chamber air temperature [°C] | 38 +/- 3 |

Typically, the foil of the present invention has a luminous transmittance (D₆₅) of more than 60%, preferably more than 70%, more preferably more than 80% for each wavelength from 400 nm to 800 nm, measured before a weathering test according to norm DIN EN ISO 13468-2 (2006).

### Process for the manufacturing of the foil

Depending on the intended application, the foil of the present invention can be produced substantially at any desired thickness. A surprising factor here is the ability to obtain an exceptional weathering resistance and mechanical stability and a very high weathering and mechanical protection provided to the substrate. However, for the purposes of the invention preference is given to a relatively thin film or foil, characterized by a thickness in the range from 10.0 to 200.0 µm, preferably in the range from 40.0 to 120.0 µm, particularly preferably in the range from 50.0 to 90.0 µm.

The mixtures of individual components of the layers can be prepared via dry blending of the components, which are in pulverulent, granular, or preferably pelletized, form. Such mixtures may also be processed via melting and mixing of the individual components in the molten state or via melting of dry premixes of the individual components to give a ready-to-use moulding composition. By way of example, this may take place in single- or twin-screw extruders. The resultant extrudate may then be pelletized. Conventional additives, auxiliaries and/or fillers may be admixed directly or added subsequently by the final user as required.

The multilayer foil of the present invention can then be produced by methods known per se, examples being co-extrusion or lamination or by extrusion lamination.

### Application of the foil onto a substrate

The inventive foils have a broad range of applications. One preferred use of the foils is coating of plastics mouldings or metallic items. In particular, the substrate protected by the foil may be a melamine-resin-impregnated paper, a polymeric material which is optionally fibre-reinforced, preferably polyvinyl chloride (PVC), polycarbonate (PC) or polypropylene (PP) or a metal, preferably steel or aluminium, and the coextruded foil is directly applied to the substrate.

Here, it is particularly advantageous to coat plastics mouldings which comprise PVC, or are composed of PVC. The protected substrate is advantageously by way of example a window profile composed of aluminium, of wood, of plastic or of a composite material, may bear a decorative foil, preferably composed of PC, SAN or PVC. This article is then protected from weathering by using the inventive foil. Another preferred use of the inventive foil is design of a high-specification, durable surface finish for substrate materials. Furthermore, the foils can be advantageously used in traffic control materials (TCM).

As will be readily appreciated by a skilled person, the foil of the present invention is applied to a substrate in such a way that the layer A is directed towards the outer surface of the coated substrate. In other words, if the foil of the present invention substantially consists of layers A and B, the layer B is located between the layer A and the substrate. In embodiments, in which the foil of the present invention further comprises the layer C, the layer C is located between the layer B and the surface of the coated substrate.

A further aspect of the present invention is a process for the manufacturing of a coated article, comprising a step of applying a foil onto the surface of said substrate.

Application of the inventive foil onto a substrate is in all cases relatively simple. The foil is preferably applied by means of co-extrusion to the material to be protected. Application of the foil by means of foil lamination to the material to be protected is also possible. Preference is also given to a use which is characterized in that the foil is applied by means of extrusion lamination to the material to be protected. Preferably, extrusion lamination is carried out at a temperature greater than or equal to 120° C and upon application of a mechanical pressure greater than or equal to 1 MPa, preferably greater than or equal to 2 MPa, more preferably greater than or equal to 4 MPa, more preferably greater than or equal to 6 MPa, more preferably greater than or equal to 7 MPa.

In one embodiment of the present invention, the article itself may be a foil or a sheet, which can be conveniently stored and/or handled in form of a roll.

In some embodiments the coated article of the present invention may be a high pressure laminate (HPL), a medium pressure laminate (MPL) or a continuous pressure laminate (CPL). In a particularly preferred embodiment, multi-layer materials obtainable using the foil of the invention are decorative high-pressure laminates (HPLs) according to EN 438-6, which are composed of layers of webs of fibrous material (*e.g.* paper), impregnated with curable resins, these being bonded to one another by means of the high-pressure process described below. The surface layer of the material, one or both sides of which have decorative colours or patterns, is impregnated with resins based on amino plastics, *e.g.* melamine resins. The amino or methylolamino groups present in the decorative layer during the high-pressure process then serve as reaction partners for covalent bonding to the polymethacrylate layer (in this case foils) for surface finishing. The corresponding high-pressure laminates are described *inter alia* in US 2017/019 7391 A1.

Hence, one aspect of the present invention relates to a process for the manufacturing of a high-pressure laminate using the foil as described above.

The high-pressure process produces a long lasting bond between the decorative layer and the polymethacrylate layer applied according to the invention. The temperature set during the process and the associated interpenetration of the melamine-resin-saturated decorative paper into the foil ensures sufficient formation of covalent bonds and therefore long lasting bonding to the material.

The high-pressure process is defined as simultaneous use of heat (temperature greater than or equal to 120 °C) and high pressure (greater than or equal to 3 MPa), the result being that the curable resins flow and then harden to produce a homogeneous non-porous material of relatively high density (at least 1.35 g/cm³) having the required surface structure.

Typically, the coated article of the present invention has the following arrangement of layers within the multilayer foil:
the layer D, if present, forms an outer surface of the coated article;
the layer A is located between the layer D and the substrate;
the layer E, if present, is located between the layer A and the layer B
the layer B is located between the layer A and the substrate; and
the layer C, if present, is located between the layer B and the substrate.

The following examples will illustrate the present invention in a greater detail without being limiting.

### Examples

The weathering tests were carried out according to DIN EN ISO 4892-2 method A with cycle no 1 at the wavelength range from 300 to 400 nm under the following conditions:

| | |
|---|---|
| Exposure period (dry / water spray) [min] | 102/18 |
| Black standard temperature [°C] | 65 +/- 3 |
| Irradiance (300 - 400nm) [W/m²] | 60 +/- 2 |
| Relative humidity [%] | 65 +/-10 |
| Chamber air temperature [°C] | 38 +/- 3 |

Optical assessments were made after 0 h, 1 000 h, 2 000 h, 4 000 h, 6 000 h, 8 000 h, 10 000 h, 12 000 h, 14 000 hand 16 000 h.

The protective films were produced by adapter coextrusion using chill-roll process at 240-250 °C (melt temperature) at extrusion speed 7.3 m/min using a 35 mm-diameter single screw extruder and a 25 mm-diameter single screw coextruder. Alternatively, production can be achieved by way of a multiple-manifold coextrusion process or a combination of adapter and multiple-manifold coextrusion.

The adhesion promoter used was a copolymer of 75 wt.-% of MMA, 15 wt.-% of styrene and 10 wt.-% of maleic anhydride. The weight-average molar mass Mw of this copolymer was about 100 000 g/mol (determined by means of GPC against a PMMA standard).

Accelerated weathering testing was performed according to the norm ISO 4892-2 (2013) as described above.

### Production Example 1 (comparative foil according to WO 2007/0074138 A1)

A PMMA monolayer foil having a total thickness of 53 µm was prepared by extrusion at 240-250 °C (melt temperature) at extrusion speed 7.3 m/min using a 35 mm-diameter single screw extruder and a 25 mm-diameter single screw coextruder.

The monolayer foil had the following composition:
a) 85.7 wt.-% of a polymer acrylic core shell impact modifier with a composition of
   61.3 wt.-% of methyl methacrylate,
   38.0 wt.-% of butyl acrylate,
   0.7 wt.-% of allyl methacrylate,
b) 12.3 wt.-% PLEXIGLAS® 7H, available from Evonik Performance Materials GmbH,
c) 1.0 wt.-% of Tinuvin® 360 (phenol-2,2'-methylene-bis(6-(2*H*-benzotriazol-2-yl)-4-(1,1,3,3-tetramethylbutyl))), available from BASF SE (Ludwigshafen, Germany),
d) 0.7 wt.-% of Tinuvin® 1600 (6-[4,6-bis(4-phenylphenyl)-1,2-dihydro-1,3,5-triazin-2-ylidene]-3-[(2-ethylhexyl)oxy]cyclohexa-2,4-dien-1-one), available from BASF SE
e) 0.3 wt-% of Sabo®stab UV 119 (1,3,5-triazine-2,4,6-triamine, *N*2,*N*2"-1,2-ethanediylbis[*N*2-[3-[[4,6-bis[butyl(1,2,2,6,6-pentamethyl-4-piperidinyl)amino]-1,3,5-triazin-2-yl]amino]propyl]-*N'*,*N"*-dibutyl-*N',N"*-bis(1,2,2,6,6-pentamethyl-4-piperidinyl)), available from Sabo S.p.A (Levate, Italy).

### Production Example 2 (foil according to the invention)

PMMA-based bilayer foil having a thickness of 53 µm was prepared by co-extrusion under the same conditions as in Example 1.

The layer A had a thickness of 23 µm and the following composition:
a) 85.7 wt.-% of a polymer acrylic core shell impact modifier with a composition of
   61.3 wt.-% of methyl methacrylate,
   38.0 wt.-% of butyl acrylate,
   0.7 wt.-% of allyl methacrylate,
b) 12.3 wt.-% PLEXIGLAS® 7H, available from Evonik Performance Materials GmbH,
c) 1.72 wt.-% of Tinuvin® 1600, available from BASF SE
d) 0.3 wt-% of Sabo®stab UV 119, available from Sabo S.p.A.

The transmittance of the layer A at the wavelength of 360 nm was 1.7%. The spectral transmittance of the layer A at any wavelength λ_{A} was not more than 10%, wherein 270 nm ≤ λ_{A} ≤ 360 nm.

The layer B had a thickness of 30 µm and the following composition:
a) 85.7 wt.-% of a polymer acrylic core shell impact modifier with a composition of
   61.3 wt.-% of methyl methacrylate,
   38.0 wt.-% of butyl acrylate,
   0.7 wt.-% of allyl methacrylate,
b) 12.3 wt.-% PLEXIGLAS® 7H, available from Evonik Performance Materials GmbH,
c) 1.7 wt.-% of Tinuvin® 360, available from BASF SE
d) 0.3 wt-% of Sabo®stab UV 119, available from Sabo S.p.A.

The transmittance of the layer B at the wavelength of 370 nm was 0.7 %. The spectral transmittance of the layer B at any wavelength λ_{B} is not more than 10%, wherein 270 nm ≤ λ_{B} ≤ 370 nm.

The foils of Production Examples 1 and 2 were then laminated onto a PVC decorative film, whereas the foil of Production Example 2 was laminated with the layer B onto the PVC film (Example 2a). As a comparative example, the foil of Production Example 2 was laminated with the layer A onto the PVC film (Example 2b).

The samples of Example 1, 2a and 2b were subjected to accelerated weathering test according to the norm ISO 4892-2 (2013) method 1. Subsequently, the colour difference ΔE CIELAB 1976 (D₆₅, 10°) of each sample was determined according to the norm DIN EN ISO 11664-4:2011-07.

The obtained data are summarized in Table 1 below:

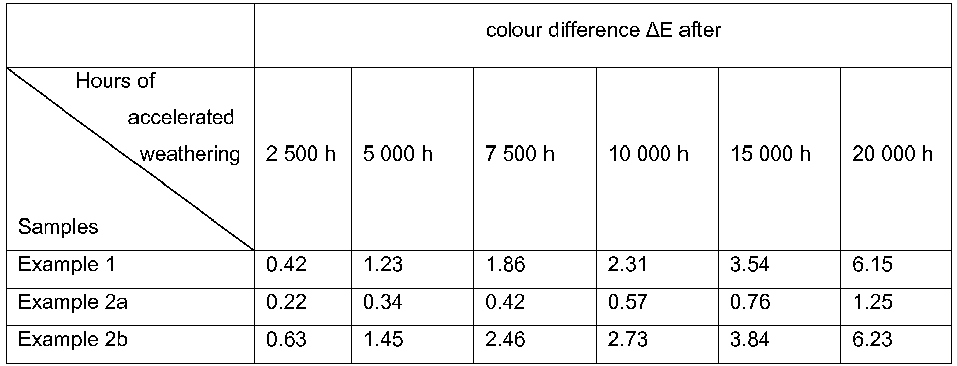

In Examples 1 and 2b (comparative examples) the UV protection above a wavelength of 360 nm provided by the foil is only moderate and therefore after about 10 000 h the colour difference of more than 2 after about 15 000 of more than 3 is observed. These values are recognisable by an observer, even with a naked eye, as a UV damage of the PVC decorative film or of the decorative printing layer.

In contrast, the UV protection provided by the foil in Example 2a (inventive example) provides a significantly better UV protection. Even after a 20 000 h exposure the detected colour difference was below 2 *i.e.* practically invisible to an observer. No visible damage of the film took place.

## Claims

1. A coextruded PMMA-based multi-layer foil comprising at least a PMMA-based layer A and a PMMA-based layer B for application on a substrate having a surface in such a way, that the layer A is directed towards environment and the layer B is directed towards the surface of the substrate, wherein the layer A comprises, based on the total weight of the layer A:
from 0.0 to 99.9 wt.-% of a polymethyl(meth)acrylate;
from 0.0 to 95.0 wt.-% of one or several impact modifiers selected from particulate impact modifiers and thermoplastic impact modifiers;
from 0.0 to 30.0 wt.-% of a fluoropolymer;
from 0.1 to 5.0 wt.-% of a first UV-absorber, wherein the first UV-absorber is a triazine type UV-absorber;
from 0.0 to 5.0 wt.-% of one or several UV-stabilizers;
wherein the cumulative content of the polymethyl(meth)acrylate and of one or several impact modifiers in the layer A is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer A; the layer A comprises one or more UV stabilisers selected from hindered amine light stabilizers (HALS) and antioxidants; and wherein
the spectral transmittance of the layer A at any wavelength λ_{A} is not more than 10%; wherein 270 nm ≤ λ_{A} ≤ 360 nm; and
the layer B comprises, based on the total weight of the layer B:
from 0.0 to 99.9 wt.-% of a polymethyl(meth)acrylate;
from 0.0 to 85.0 wt.-% of one or several impact modifiers selected from particulate impact modifiers and thermoplastic impact modifiers;
from 0.1 to 5.0 wt.-% of a second UV-absorber, which is distinct from the first UV-absorber, wherein the second UV-absorber is a benzotriazole type UV-absorber;
from 0.0 to 5.0 wt.-% of one or several UV-stabilizers; and
from 0.0 to 20.0 wt.-% of an adhesion-promoting copolymer comprising
(i) from 70.0 to 95.0 wt.-% methyl methacrylate;
(ii) from 0.5 to 15.0 wt.-% maleic anhydride; and
(iii) from 0.0 to 25.0 wt.-% of other vinyl-copolymerizable monomers having no functional groups other than the vinyl function, based on the weight of the adhesion-promoting copolymer; and
wherein the cumulative content of the polymethyl(meth)acrylate and of one or several impact modifiers in the layer B is at least 50 wt.-%, preferably at least 60 wt.-%, more preferably at least 70 wt.-%, yet even more preferably at least 80 wt.-%, still more preferably at least 90 wt.-%, particularly preferably at least 95 wt.-% and not more than 99.9 wt.-%, based on the weight of the layer B, the layer B comprises one or more UV stabilisers selected from hindered amine light stabilizers (HALS) and antioxidants; and wherein
the spectral transmittance of the layer B at any wavelength λ_{B} is not more than 10%; wherein 270 nm ≤ λ_{B} ≤ 370 nm; and
the layer A comprises not more than 0.1 wt.-%, preferably not more than 0.05 wt.-% of the second UV absorber and
the layer B comprises not more than 0.1 wt.-%, preferably not more than 0.05 wt.-% of the first UV absorber.

2. Coextruded foil according to Claim 1, wherein the foil further comprises an adhesion-promoting layer C, wherein the layer C comprises, based on the total weight of the layer C:
from 0.0 to 95.0 wt.-% of a polymethyl(meth)acrylate;
from 0.0 to 75.0 wt.-% of one or several impact modifiers selected from particulate impact modifiers and thermoplastic impact modifiers;
from 0.0 to 5.0 wt.-% of a UV-absorber, which is preferably the second UV-absorber;
from 0.0 to 5.0 wt.-% of one or several UV-stabilizers; and
from 5.0 to 80.0 wt.-% of an adhesion-promoting copolymer comprising
(i) from 70.0 to 95.0 wt.-% methyl methacrylate;
(ii) from 0.5 to 15.0 wt.-% maleic anhydride; and
(iii) from 0.0 to 25.0 wt.-% of other vinyl-copolymerizable monomers having no functional groups other than the vinyl function, based on the weight of the adhesion-promoting copolymer; and
wherein the cumulative content of the polymethyl(meth)acrylate and of one or several impact modifiers in the layer C is at least 20.0 wt.-%, preferably at least 30.0 wt.-%, more preferably at least 40.0 wt.-% and not more than 95.0 wt.-%, based on the weight of the layer C; the layer C comprises one or more UV stabilisers selected from hindered amine light stabilizers (HALS) and antioxidants and
the layer B comprises less than 3.0 wt.-%, preferably less than 1.0 wt.-%, based on the weight of the layer B, of said adhesion-promoting copolymer.

3. Coextruded foil according to Claim 1 or 2, wherein the foil further comprises a fluoropolymer-based layer D, which is adjacent to the layer A, the layer D comprising, based on the total weight of the layer D:
from 40.0 to 100.0 wt.-% of at least one fluoropolymer;
from 0.0 to 60.0 wt.-% of a polymethyl(meth)acrylate; and
from 0.0 to 30.0 wt.-% of substantially spherical glass beads.

4. Coextruded foil according to any of Claims 1 to 3, wherein the at least one fluoropolymer is selected from polyvinylidene fluoride, polyvinylfluoride, polytetrafluorethylene, polyethylenetetrafluoroethylene, fluorinated ethylene-propylene or a mixture or copolymers thereof.

5. Coextruded foil according to any of Claims 1 to 4, wherein the foil further comprises a layer E, which is located between the layer A and the layer B and comprises a combination of the first UV absorber and the second UV absorber.

6. Coextruded foil according to any of Claims 1 to 5, wherein
the layer A comprises from 0.5 to 3.0 wt.-%, based on the weight of the layer A, of a triazine type compound as a first UV absorber; and
the layer B comprises from 0.5 to 4.0 wt.-%, based on the weight of the layer B, of a benzotriazole type compound as a second UV absorber.

7. Coextruded foil according to any of Claims 1 to 6, wherein the polymethylmethacrylate is polymethyl methacrylate having an average molar weight Mw of from 80 000 g/mol to 220 000 g/mol and is obtainable by polymerization of a composition whose polymerizable constituents comprise, based on the weight of the polymerisable composition:
(a) from 50.0 to 99.9 wt.-%, preferably from 80.0 to 99.9 wt.-%, more preferably from 91.0 to 99.9 wt.-% of methyl methacrylate,
(b) from 0.1 to 50.0 wt.-%, preferably from 0.1 to 20.0 wt.-%, more preferably from 0.1 to 9.0 wt.-% of an acrylic acid ester of a C1-C4 alcohol,
(c) from 0.0 to 10.0 wt.-% of at least one further monomer copolymerizable with the monomers (a) and (b).

8. Coextruded foil according to any of Claims 1 to 7, wherein
the layer A has a thickness from 10.0 µm to 100.0 µm, preferably from 15.0 µm to 50.0 µm, more preferably from 20.0 µm to 40.0 µm; and
the layer B has a thickness from 10.0 µm to 80.0 µm, preferably from 15.0 µm to 50.0 µm, more preferably from 20.0 µm to 40.0 µm;
the layer C, if present, has a thickness from 1.0 µm to 20.0 µm, preferably from 2.0 µm to 15.0 µm, more preferably from 3.0 µm to 10.0 µm;
the layer D, if present, has a thickness from 1.0 µm to 40.0 µm, preferably from 2.0 µm to 30.0 µm, more preferably from 3.0 µm to 20.0 µm; and
the layer E, if present, has a thickness from 10.0 µm to 80.0 µm, preferably from 15.0 µm to 50.0 µm, more preferably from 20.0 µm to 40.0 µm.

9. Coextruded foil according to any of Claims 1 to 8, wherein the foil has an average transmittance of not more than 40%, preferably not more than 30%, more preferably not more than 10% in a wavelength interval from 350 nm to 390 nm.

10. Coextruded foil according to any of Claims 1 to 9, wherein the spectral transmittance of the foil at any wavelength A is not more than 5%, preferably not more than 2%, more preferably not more than 1%; wherein 270 nm ≤ λ ≤ 370 nm after accelerated weathering testing for 15 000 hours according to the norm ISO 4892-2 (2013), method 1, 30 GJ/m² radiant exposure.

11. Coextruded foil according to any of Claims 1 to 10 wherein the foil has a luminous transmittance D₆₅ of more than 60%, preferably more than 70%, more preferably more than 80% for each wavelength from 400 nm to 800 nm, measured before a weathering test according to norm DIN EN ISO 13468-2 (2006).

12. A coated article having an outer surface and comprising a substrate which is at least partially covered by a coextruded foil according to any of Claims 1 to 11, wherein the coextruded foil comprises layers, located in the following order, starting from the outer surface:
• optionally, the layer D;
• the layer A;
• optionally, the layer E;
• the layer B; and
• optionally, the layer C.

13. Coated article according to Claim 12, wherein the coated article is a high pressure laminate, a medium pressure laminate or a continuous pressure laminate.

14. Coated article according to Claim 12 or 13, wherein, the substrate is a melamine-resin-impregnated paper, a polymeric material which is optionally fibre-reinforced, preferably polyvinyl chloride, polycarbonate or polypropylene or a metal, preferably steel or aluminium, and the coextruded foil is directly applied to the substrate.

15. Use of a coextruded foil according to any of Claims 1 to 11 for coating of a substrate, preferably by a process selected from co-extrusion, lamination or extrusion lamination.

## Patentansprüche

1. Coextrudierte PMMA-basierte mehrschichtige Folie, die mindestens eine PMMA-basierte Schicht A und eine PMMA-basierte Schicht B zur Verwendung auf einem Substrat mit einer Oberfläche so aufweist, dass die Schicht A zur Umgebung weist und die Schicht B zur Oberfläche des Substrats weist, wobei die Schicht A, bezogen auf das Gesamtgewicht der Schicht A, aufweist:
von 0,0 bis 99,9 Gew.-% eines Polymethyl(meth)acrylats;
von 0,0 bis 95,0 Gew.-% eines oder mehrerer Schlagzähmodifizierer, die aus partikelförmigen Schlagzähmodifizierern und thermoplastischen Schlagzähmodifizierern ausgewählt sind;
von 0,0 bis 30,0 Gew.-% eines Fluorpolymers;
von 0,1 bis 5,0 Gew.-% eines ersten UV-Absorbers, wobei der erste UV-Absorber ein UV-Absorber vom Triazin-Typ ist;
von 0,0 bis 5,0 Gew.-% eines oder mehrerer UV-Stabilisatoren;
wobei der Gesamtgehalt des Polymethyl(meth)acrylats und eines oder mehrerer Schlagzähmodifizierer in der Schicht A mindestens 50 Gew.-%, vorzugsweise mindestens 60 Gew.-%, noch mehr bevorzugt mindestens 70 Gew.-%, sogar noch mehr bevorzugt mindestens 80 Gew.-%, noch mehr bevorzugt mindestens 90 Gew.-%, besonders bevorzugt mindestens 95 Gew.-% und nicht mehr als 99,9 Gew.-%, bezogen auf das Gewicht der Schicht A, beträgt; die Schicht A einen oder mehrere UV-Stabilisatoren aufweist, die aus gehinderten Amin-Lichtstabilisatoren (HALS) und Antioxidantien ausgewählt sind; und wobei der spektrale Transmissionsgrad der Schicht A bei einer beliebigen Wellenlänge λ_{A} nicht mehr als 10 % beträgt; wobei 270 nm ≤ λ_{A} ≤ 360 nm; und
die Schicht B, bezogen auf das Gesamtgewicht der Schicht B, aufweist:
von 0,0 bis 99,9 Gew.-% eines Polymethyl(meth)acrylats;
von 0,0 bis 85,0 Gew.-% eines oder mehrerer Schlagzähmodifizierer, die aus partikelförmigen Schlagzähmodifizierern und thermoplastischen Schlagzähmodifizierern ausgewählt sind;
von 0,1 bis 5,0 Gew.-% eines zweiten UV-Absorbers, der vom ersten UV-Absorber verschieden ist, wobei der zweite UV-Absorber ein UV-Absorber vom Benzotriazol-Typ ist;
von 0,0 bis 5,0 Gew.-% eines oder mehrerer UV-Stabilisatoren; und
von 0,0 bis 20,0 Gew.-% eines haftvermittelnden Copolymers, das aufweist:
(i) von 70,0 bis 95,0 Gew.-% Methylmethacrylat;
(ii) von 0,5 bis 15,0 Gew.-% Maleinsäureanhydrid; und
(iii) von 0, 0 bis 25,0 Gew.-% andere vinyl-copolymerisierbare Monomere ohne funktionelle Gruppen außer der Vinylfunktion, bezogen auf das Gewicht des haftvermittelnden Copolymers; und
wobei der Gesamtgehalt des Polymethyl(meth)acrylats und eines oder mehrerer Schlagzähmodifizierer in der Schicht B mindestens 50 Gew.-%, vorzugsweise mindestens 60 Gew.-%, noch mehr bevorzugt mindestens 70 Gew.-%, sogar noch mehr bevorzugt mindestens 80 Gew.-%, noch mehr bevorzugt mindestens 90 Gew.-%, besonders bevorzugt mindestens 95 Gew.-% und nicht mehr als 99,9 Gew.-%, bezogen auf das Gewicht der Schicht B, beträgt, wobei die Schicht B einen oder mehrere UV-Stabilisatoren aufweist, die aus gehinderten Amin-Lichtstabilisatoren (HALS) und Antioxidantien ausgewählt sind; und wobei der spektrale Transmissionsgrad der Schicht B bei einer beliebigen Wellenlänge λ_{B} nicht mehr als 10 % beträgt; wobei 270 nm ≤ λ_{B} ≤ 370 nm; und
die Schicht A nicht mehr als 0,1 Gew.-%, vorzugsweise nicht mehr als 0,05 Gew.-% des zweiten UV-Absorbers aufweist und
die Schicht B nicht mehr als 0,1 Gew.-%, vorzugsweise nicht mehr als 0,05 Gew.-% des ersten UV-Absorbers aufweist.

2. Coextrudierte Folie nach Anspruch 1, wobei die Folie außerdem eine haftvermittelnde Schicht C aufweist, wobei die Schicht C, bezogen auf das Gesamtgewicht der Schicht C, aufweist:
von 0,0 bis 95,0 Gew.-% eines Polymethyl(meth)acrylats;
von 0,0 bis 75,0 Gew.-% eines oder mehrerer Schlagzähmodifizierer, die aus partikelförmigen Schlagzähmodifizierern und thermoplastischen Schlagzähmodifizierern ausgewählt sind;
von 0,0 bis 5,0 Gew.-% eines UV-Absorbers, der vorzugsweise der zweite UV-Absorber ist;
von 0,0 bis 5,0 Gew.-% eines oder mehrerer UV-Stabilisatoren; und
von 5,0 bis 80,0 Gew.-% eines haftvermittelnden Copolymers, das aufweist:
(i) von 70,0 bis 95, 0 Gew.-% Methylmethacrylat;
(ii) von 0,5 bis 15,0 Gew.-% Maleinsäureanhydrid; und
(iii) von 0,0 bis 25,0 Gew.-% andere vinyl-copolymerisierbare Monomere ohne funktionelle Gruppen außer der Vinylfunktion, bezogen auf das Gewicht des haftvermittelnden Copolymers; und
wobei der Gesamtgehalt des Polymethyl(meth)acrylats und eines oder mehrerer Schlagzähmodifizierer in der Schicht C mindestens 20,0 Gew.-%, vorzugsweise mindestens 30,0 Gew.-%, noch mehr bevorzugt mindestens 40,0 Gew.-% und nicht mehr als 95,0 Gew.-%, bezogen auf das Gewicht der Schicht C, beträgt; die Schicht C einen oder mehrere UV-Stabilisatoren aufweist, die aus gehinderten Amin-Lichtstabilisatoren (HALS) und Antioxidantien ausgewählt sind, und
die Schicht B weniger als 3,0 Gew.-%, vorzugsweise weniger als 1,0 Gew.-%, bezogen auf das Gewicht der Schicht B, von dem haftvermittelnden Copolymer aufweist.

3. Coextrudierte Folie nach Anspruch 1 oder 2, wobei die Folie außerdem eine Fluorpolymer-basierte Schicht D aufweist, die zur Schicht A benachbart ist, wobei die Schicht D, bezogen auf das Gesamtgewicht der Schicht D, aufweist:
von 40,0 Gew-% bis 100,0 Gew.-% mindestens eines Fluorpolymers;
von 0,0 bis 60,0 Gew.-% eines Polymethyl(meth)acrylats; und
von 0,0 Gew-% bis 30,0 Gew.-% im Wesentlichen kugelförmige Glasperlen.

4. Coextrudierte Folie nach einem der Ansprüche 1 bis 3, wobei das mindestens eine Fluorpolymer aus Polyvinylidenfluorid, Polyvinylfluorid, Polytetrafluorethylen, Polyethylentetrafluorethylen, fluoriertem Ethylen-Propylen oder einer Mischung oder Copolymeren davon ausgewählt ist.

5. Coextrudierte Folie nach einem der Ansprüche 1 bis 4, wobei die Folie außerdem eine Schicht E aufweist, die zwischen der Schicht A und der Schicht B angeordnet ist und eine Kombination des ersten UV-Absorbers und des zweiten UV-Absorbers aufweist.

6. Coextrudierte Folie nach einem der Ansprüche 1 bis 5, wobei
die Schicht A von 0,5 bis 3,0 Gew.-%, bezogen auf das Gewicht der Schicht A, einer Verbindung vom Triazin-Typ als einen ersten UV-Absorber aufweist und
die Schicht B von 0,5 bis 4,0 Gew.-%, bezogen auf das Gewicht der Schicht B, einer Verbindung vom Benzotriazol-Typ als einen zweiten UV-Absorber aufweist.

7. Coextrudierte Folie nach einem der Ansprüche 1 bis 6, wobei das Polymethyl(meth)acrylat Polymethylmethacrylat ist, das eine mittlere molare Masse Mw von 80 000 g/mol bis 220 000 g/mol hat und durch eine Polymerisation einer Zusammensetzung erhältlich ist, deren polymerisierbaren Bestandteile, bezogen auf das Gewicht der polymerisierbaren Zusammensetzung, aufweist:
(a) von 50,0 bis 99,9 Gew.-%, vorzugsweise von 80,0 bis 99,9 Gew.-%, noch mehr bevorzugt von 91,0 bis 99,9 Gew.-% Methylmethacrylat,
(b) von 0,1 bis 50,0 Gew.-%, vorzugsweise von 0,1 bis 20,0 Gew.-%, noch mehr bevorzugt von 0,1 bis 9,0 Gew.-% eines Acrylsäureesters eines C1-C4-Alkohols,
(c) von 0,0 bis 10,0 Gew.-% mindestens eines weiteren Monomers, das mit den Monomeren (a) und (b) copolymerisierbar ist.

8. Coextrudierte Folie nach einem der Ansprüche 1 bis 7, wobei
die Schicht A eine Dicke von 10,0 µm bis 100,0 µm, vorzugsweise von 15,0 µm bis 50,0 µm, noch mehr bevorzugt von 20,0 µm bis 40,0 µm hat; und
die Schicht B eine Dicke von 10,0 µm bis 80,0 µm, vorzugsweise von 15,0 µm bis 50,0 µm, noch mehr bevorzugt von 20,0 µm bis 40,0 µm hat;
die Schicht C, sofern vorhanden, eine Dicke von 1,0 µm bis 20,0 µm, vorzugsweise von 2,0 µm bis 15,0 µm, noch mehr bevorzugt von 3,0 µm bis 10,0 µm hat;
die Schicht D, sofern vorhanden, eine Dicke von 1,0 µm bis 40,0 µm, vorzugsweise von 2,0 µm bis 30,0 µm, noch mehr bevorzugt von 3,0 µm bis 20,0 µm hat; und
die Schicht E, sofern vorhanden, eine Dicke von 10,0 µm bis 80,0 µm, vorzugsweise von 15,0 µm bis 50,0 µm, noch mehr bevorzugt von 20,0 µm bis 40,0 µm hat.

9. Coextrudierte Folie nach einem der Ansprüche 1 bis 8, wobei die Folie einen mittleren Transmissionsgrad von nicht mehr als 40 %, vorzugsweise nicht mehr als 30 %, noch mehr bevorzugt nicht mehr als 10 % in einem Wellenlängenintervall von 350 nm bis 390 nm hat.

10. Coextrudierte Folie nach einem der Ansprüche 1 bis 9, wobei der spektrale Transmissionsgrad der Folie bei jeder Wellenlänge λ nicht mehr als 5 %, vorzugsweise nicht mehr als 2 %, noch mehr bevorzugt nicht mehr als 1 % beträgt; wobei 270 nm ≤ λ ≤ 370 nm nach einem Schnellbewitterungstest für 15 000 Stunden gemäß der Norm ISO 4892-2 (2013), Verfahren 1, mit einer Bestrahlung von 30 GJ/m².

11. Coextrudierte Folie nach einem der Ansprüche 1 bis 10, wobei die Folie einen Lichttransmissionsgrad D₆₅ von mehr als 60 %, vorzugsweise mehr als 70 %, noch mehr bevorzugt mehr als 80 % für jede Wellenlänge von 400 nm bis 800 nm, gemessen vor einem Bewitterungstest gemäß der Norm DIN EN ISO 13468-2 (2006), hat.

12. Beschichteter Artikel, der eine Außenfläche hat und ein Substrat aufweist, welches zumindest teilweise von einer coextrudierten Folie nach einem der Ansprüche 1 bis 11 bedeckt ist, wobei die coextrudierte Folie Schichten aufweist, die in der folgenden Reihenfolge beginnend von der Außenfläche angeordnet sind:
• gegebenenfalls die Schicht D;
• die Schicht A;
• gegebenenfalls die Schicht E;
• die Schicht B und
• gegebenenfalls die Schicht C.

13. Beschichteter Artikel nach Anspruch 12, wobei der beschichtete Artikel ein Hochdrucklaminat, ein Mitteldrucklaminat oder ein continuous pressure laminat ist.

14. Beschichteter Artikel nach Anspruch 12 oder 13, wobei das Substrat ein Melaminharz-imprägniertes Papier, ein polymeres Material, das gegebenenfalls faserverstärkt ist, vorzugsweise Polyvinylchlorid, Polycarbonat oder Polypropylen oder ein Metall, vorzugsweise Stahl oder Aluminium, ist und die coextrudierte Folie direkt auf das Substrat aufgetragen wird.

15. Verwendung einer coextrudierten Folie nach einem der Ansprüche 1 bis 11 zum Beschichten eines Substrats, vorzugsweise durch ein Verfahren, das ausgewählt ist aus einer Coextrusion, Laminierung oder Extrusionslaminierung.

## Revendications

1. Feuille multicouche à base de PMMA coextrudée comprenant au moins une couche à base de PMMA A et une couche à base de PMMA B destinées à être appliquées sur un substrat ayant une surface d'une manière telle que la couche A est orientée en direction de l'environnement et la couche B est orientée en direction de la surface du substrat, dans laquelle
la couche A comprend, par rapport au poids total de la couche A :
de 0,0 à 99,9 % en poids d'un poly((méth) acrylate de méthyle) ;
de 0,0 à 95,0 % en poids d'un ou plusieurs modificateurs de la résistance au choc choisis parmi des modificateurs de la résistance au choc particulaires et des modificateurs de la résistance au choc thermoplastiques ;
de 0,0 à 30,0 % en poids d'un polymère fluoré ;
de 0,1 à 5,0 % en poids d'un premier absorbeur d'UV, le premier absorbeur d'UV étant un absorbeur d'UV de type triazine ;
de 0, 0 à 5,0 % en poids d'un ou plusieurs stabilisants vis-à-vis des UV ;
dans laquelle la teneur cumulée du poly((méth)acrylate de méthyle) et d'un ou plusieurs modificateurs de la résistance au choc dans la couche A est d'au moins 50 % en poids, de préférence d'au moins 60 % en poids, plus préférablement d'au moins 70 % en poids, plus préférablement même encore d'au moins 80 % en poids, plus préférablement encore d'au moins 90 % en poids, particulièrement préférablement d'au moins 95 % en poids et de pas plus de 99,9 % en poids, par rapport au poids de la couche A ; la couche A comprend un ou plusieurs stabilisants vis-à-vis des UV choisis parmi des photostabilisants amines encombrées (HALS) et des antioxydants ; et dans laquelle
le facteur de transmission spectrale de la couche A à une quelconque longueur d'onde λ_{A} est de pas plus de 10 % ;
avec 270 nm ≤ λ_{A} ≤ 360 nm ; et
la couche B comprend, par rapport au poids total de la couche B :
de 0, 0 à 99,9 % en poids d'un poly((méth)acrylate de méthyle) ;
de 0,0 à 85,0 % en poids d'un ou plusieurs modificateurs de la résistance au choc choisis parmi des modificateurs de la résistance au choc particulaires et des modificateurs de la résistance au choc thermoplastiques ; de 0,1 à 5,0 % en poids d'un second absorbeur d'UV, qui est différent du premier absorbeur d'UV, le second absorbeur d'UV étant un absorbeur d'UV de type benzotriazole ;
de 0,0 à 5,0 % en poids d'un ou plusieurs stabilisants vis-à-vis des UV ; et
de 0,0 à 20,0 % en poids d'un copolymère favorisant l'adhérence comprenant
(i) de 70,0 à 95, 0 % en poids de méthacrylate de méthyle ;
(ii) de 0,5 à 15,0 % en poids d'anhydride maléique ; et
(iii) de 0,0 à 25,0 % en poids d'autres monomères copolymérisables vinyliques n'ayant pas de groupes fonctionnels autres que la fonction vinyle, par rapport au poids du copolymère favorisant l'adhérence ; et
dans laquelle la teneur cumulée du poly((méth)acrylate de méthyle) et d'un ou plusieurs modificateurs de la résistance au choc dans la couche B est d'au moins 50 % en poids, de préférence d'au moins 60 % en poids, plus préférablement d'au moins 70 % en poids, plus préférablement même encore d'au moins 80 % en poids, plus préférablement encore d'au moins 90 % en poids, particulièrement préférablement d'au moins 95 % en poids et de pas plus de 99,9 % en poids, par rapport au poids de la couche B, la couche B comprend un ou plusieurs stabilisants vis-à-vis des UV choisis parmi des photostabilisants amines encombrées (HALS) et des antioxydants ; et dans laquelle
le facteur de transmission spectrale de la couche B à une quelconque longueur d'onde λ_{B} est de pas plus de 10 % ; avec 270 nm ≤ λ_{B} ≤ 370 nm ; et
la couche A ne comprend pas plus de 0,1 % en poids, de préférence pas plus de 0,05 % en poids du second absorbeur d'UV et
la couche B ne comprend pas plus de 0,1 % en poids, de préférence pas plus de 0,05 % en poids du premier absorbeur d'UV.

2. Feuille coextrudée selon la revendication 1, la feuille comprenant en outre une couche favorisant l'adhérence C, dans laquelle la couche C comprend, par rapport au poids total de la couche C :
de 0,0 à 95, 0 % en poids d'un poly((méth)acrylate de méthyle) ;
de 0,0 à 75,0 % en poids d'un ou plusieurs modificateurs de la résistance au choc choisis parmi des modificateurs de la résistance au choc particulaires et des modificateurs de la résistance au choc thermoplastiques ;
de 0,0 à 5,0 % en poids d'un absorbeur d'UV, qui est de préférence le second absorbeur d'UV ;
de 0,0 à 5,0 % en poids d'un ou plusieurs stabilisants vis-à-vis des UV ; et
de 5,0 à 80,0 % en poids d'un copolymère favorisant l'adhérence comprenant
(i) de 70,0 à 95,0 % en poids de méthacrylate de méthyle ;
(ii) de 0,5 à 15,0 % en poids d'anhydride maléique ; et
(iii) de 0,0 à 25,0 % en poids d'autres monomères copolymérisables vinyliques n'ayant pas de groupes fonctionnels autres que la fonction vinyle, par rapport au poids du copolymère favorisant l'adhérence ; et
dans laquelle la teneur cumulée du poly((méth)acrylate de méthyle) et d'un ou plusieurs modificateurs de la résistance au choc dans la couche C est d'au moins 20,0 % en poids, de préférence d'au moins 30,0 % en poids, plus préférablement d'au moins 40,0 % en poids et de pas plus de 95,0 % en poids, par rapport au poids de la couche C ;
la couche C comprend un ou plusieurs stabilisants vis-à-vis des UV choisis parmi des photostabilisants amines encombrées (HALS) et des antioxydants et
la couche B comprend moins de 3,0 % en poids, de préférence moins de 1,0 % en poids, par rapport au poids de la couche B, dudit copolymère favorisant l'adhérence.

3. Feuille coextrudée selon la revendication 1 ou 2, la feuille comprenant en outre une couche à base de polymère fluoré D, qui est adjacente à la couche A, la couche D comprenant, par rapport au poids total de la couche D :
de 40,0 à 100,0 % en poids d'au moins un polymère fluoré ;
de 0,0 à 60,0 % en poids d'un poly((méth) acrylate de méthyle) ; et
de 0,0 à 30,0 % en poids de billes de verre pratiquement sphériques.

4. Feuille coextrudée selon l'une quelconque des revendications 1 à 3, dans laquelle l'au moins un polymère fluoré est choisi parmi du poly(fluorure de vinylidène), du poly(fluorure de vinyle), du polytétrafluoroéthylène, du poly(éthylène-tétrafluoroéthylène), de l'éthylène-propylène fluoré ou un mélange ou des copolymères de ceux-ci.

5. Feuille coextrudée selon l'une quelconque des revendications 1 à 4, la feuille comprenant en outre une couche E, qui est située entre la couche A et la couche B et qui comprend une association du premier absorbeur d'UV et du second absorbeur d'UV.

6. Feuille coextrudée selon l'une quelconque des revendications 1 à 5, dans laquelle
la couche A comprend de 0,5 à 3,0 % en poids, par rapport au poids de la couche A, d'un composé de type triazine en tant que premier absorbeur d'UV ; et
la couche B comprend de 0,5 à 4,0 % en poids, par rapport au poids de la couche B, d'un composé de type benzotriazole en tant que second absorbeur d'UV.

7. Feuille coextrudée selon l'une quelconque des revendications 1 à 6, dans laquelle le poly((méth)acrylate de méthyle) est du poly(méthacrylate de méthyle) ayant une masse moléculaire moyenne Mw de 80 000 g/mol à 220 000 g/mol et peut être obtenu par polymérisation d'une composition dont les constituants polymérisables comprennent, par rapport au poids de la composition polymérisable :
(a) de 50,0 à 99,9 % en poids, de préférence de 80,0 à 99,9 % en poids, plus préférablement de 91,0 à 99,9 % en poids de méthacrylate de méthyle,
(b) de 0,1 à 50,0 % en poids, de préférence de 0,1 à 20,0 % en poids, plus préférablement de 0,1 à 9,0 % en poids d'un ester d'acide acrylique et d'un alcool en C1-C4,
(c) de 0,0 à 10,0 % en poids d'au moins un autre monomère copolymérisable avec les monomères (a) et (b).

8. Feuille coextrudée selon l'une quelconque des revendications 1 à 7, dans laquelle
la couche A a une épaisseur de 10,0 µm à 100,0 µm, de préférence de 15,0 µm à 50,0 µm, plus préférablement de 20,0 µm à 40,0 µm ; et
la couche B a une épaisseur de 10,0 µm à 80,0 µm, de préférence de 15,0 µm à 50,0 µm, plus préférablement de 20,0 µm à 40,0 µm ;
la couche C, si elle est présente, a une épaisseur de 1,0 µm à 20,0 µm, de préférence de 2,0 µm à 15,0 µm, plus préférablement de 3,0 µm à 10,0 µm ;
la couche D, si elle est présente, a une épaisseur de 1,0 µm à 40,0 µm, de préférence de 2,0 µm à 30,0 µm, plus préférablement de 3,0 µm à 20,0 µm ; et
la couche E, si elle est présente, a une épaisseur de 10,0 µm à 80,0 µm, de préférence de 15,0 µm à 50,0 µm, plus préférablement de 20,0 µm à 40,0 µm.

9. Feuille coextrudée selon l'une quelconque des revendications 1 à 8, la feuille ayant un facteur de transmission moyen de pas plus de 40 %, de préférence de pas plus de 30 %, plus préférablement de pas plus de 10 % dans un intervalle de longueur d'onde de 350 nm à 390 nm.

10. Feuille coextrudée selon l'une quelconque des revendications 1 à 9, le facteur de transmission spectrale de la feuille à une quelconque longueur d'onde λ étant de pas plus de 5 %, de préférence de pas plus de 2 %, plus préférablement de pas plus de 1 % ; avec 270 nm ≤ λ ≤ 370 nm après un essai d'exposition aux intempéries en accéléré pendant 15 000 heures selon la norme ISO 4892-2 (2013), méthode 1, exposition énergétique de 30 GJ/m².

11. Feuille coextrudée selon l'une quelconque des revendications 1 à 10, la feuille ayant un facteur de transmission lumineuse D₆₅ de plus de 60 %, de préférence de plus de 70 %, plus préférablement de plus de 80 % pour chaque longueur d'onde de 400 nm à 800 nm, mesuré avant un essai d'exposition aux intempéries selon la norme DIN EN ISO 13468-2 (2006).

12. Article revêtu ayant une surface externe et comprenant un substrat qui est au moins en partie recouvert d'une feuille coextrudée selon l'une quelconque des revendications 1 à 11, dans lequel la feuille coextrudée comprend des couches, situées dans l'ordre suivant, à partir de la surface externe :
• éventuellement, la couche D ;
• la couche A ;
• éventuellement, la couche E ;
• la couche B ; et
• éventuellement, la couche C.

13. Article revêtu selon la revendication 12, l'article revêtu étant un stratifié haute pression, un stratifié moyenne pression ou un stratifié de pression continue.

14. Article revêtu selon la revendication 12 ou 13, dans lequel le substrat est un papier imprégné de résine de mélamine, un matériau polymère qui est éventuellement renforcé par des fibres, de préférence du poly(chlorure de vinyle), du polycarbonate ou du polypropylène ou un métal, de préférence de l'acier ou de l'aluminium, et la feuille coextrudée est appliquée directement sur le substrat.

15. Utilisation d'une feuille coextrudée selon l'une quelconque des revendications 1 à 11 pour le revêtement d'un substrat, de préférence par un procédé choisi entre la coextrusion, la stratification et l'extrusion-stratification.
